**Europäisches Patentamt**

**European Patent Office**

**Office européen des brevets**

(19)

(11) Numéro de publication: **0 283 469 B1**

## (12) FASCICULE DE BREVET EUROPEEN

(45) Date de publication de fascicule du brevet: **04.03.92**

(21) Numéro de dépôt: **85904644.3**

(22) Date de dépôt: **23.09.85**

(86) Numéro de dépôt internationale :
**PCT/FR85/00259**

(87) Numéro de publication internationale :
**WO 87/01789 (26.03.87 87/07)**

(51) Int. Cl.5: **F16S 5/00**, E04B 1/62,
E04C 3/00, E04H 9/00,
E04H 15/20, E06B 3/01,
F16M 1/00, F41H 5/02,
B63B 3/00, B64C 1/00,
B01D 61/00

(54) **STRUCTURE ALVEOLAIRE MULTIDIRECTIONNELLE A INERTIE POUVANT VARIER, PROCEDE DE FABRICATION, ET APPLICATIONS D'UNE TELLE STRUCTURE.**

(43) Date de publication de la demande:
**28.09.88 Bulletin 88/39**

(45) Mention de la délivrance du brevet:
**04.03.92 Bulletin 92/10**

(84) Etats contractants désignés:
**AT BE CH DE FR GB IT LI LU NL SE**

(56) Documents cités:
EP-A- 0 117 597    DE-B- 1 042 430
FR-A- 2 505 730    FR-A- 2 548 726
GB-A- 131 640      US-A- 2 077 729
US-A- 3 109 766    US-A- 3 170 471
US-A- 3 213 628    US-A- 3 229 649
US-A- 3 504 761    US-A- 3 611 648
US-A- 3 737 043    US-A- 3 765 299
US-A- 4 095 386    US-A- 4 198 454

(73) Titulaire: **Lecaroz, Jean**
**6, Place Corneille**
**F-92100 Boulogne(FR)**

(72) Inventeur: **Lecaroz, Jean**
**6, Place Corneille**
**F-92100 Boulogne(FR)**

(74) Mandataire: **Levesque, Denys et al**
**Cabinet Beau de Loménie 55, rue d'Amsterdam**
**F-75008 Paris(FR)**

## Description

La présente invention a pour objet une structure alvéolaire à résistance multidirectionnelle, ses procédés de fabrication ainsi que les applications de cette structure

On connaît depuis longtemps des constructions dont le modèle le plus répandu, à section hexagonale, est défini par " nid d'abeille ".

Leur utilisation est très large, notamment dans les panneaux de construction, d' insonorisation, d' engins spatiaux et d'aéronefs, dans des renforcements structuraux de formes à propriétés mécaniques exceptionnelles. D'une façon générale dans tous les cas où l'on recherche une grande stabilité dimensionnelle au regard de différentes contraintes, phénomènes ou environnements dans le meilleur rapport poids/performances.

La généralisation des applications de telles structures est cependant limitée par des causes inhérentes à leur conception : leur plus grande résistance à la rupture n'est efficace que dans une direction (l'orthogonale aux plans parallèles définis par leurs surfaces extérieures) et leur faible résistance au cisaillement le long de leurs plans de discontinuité.

Elles sont incapables de supporter certaines charges compressives ponctuelles comme des tiges d'assemblage ou des impacts.

Elles sont inutilisables pour des constructions épaisses devant résister à des forces appliquées selon diverses directions.

L'invention a pour objet la construction de corps à structure alvéolaire autoporteuse, d'une grande rigidité, résistant à des contraintes exercées multidirectionnellement, ensemble ou séparément, à des impacts, des pressions, des ondes de choc, des phénomènes acoustiques et thermiques, en utilisant les volumes libres disponibles comme des ensembles à caractéristiques différentes ou comme amortisseur et en pouvant faire varier le poids de ce corps en le remplissant de fluides différents, statiques ou en circulation, sous des pressions différentes et de comporter des agents spécialisés permanents ou qui peuvent être mis en action sous certaines contraintes de pression, de température, etc....

Ce résultait est obtenu, conformément à la présente invention, grace à une structure formée par la répétition tridimensionnelle d'un même motif constitué par une cellule polyédrique cloisonnée dont les faces et les cloisons sont matérialisées par des parois pleines. Selon l'invention,

cette cellule cloisonnée est composée de quatre pentaèdres à six sommets et neuf arêtes possédant une base rectangulaire, une arête principale qui est parallèle à une paire de côtés opposés de la base et dont la longueur, identique pour les quatre pentaèdres, est supérieure à celle de ces côtés, et quatre arêtes d'égale longueur joignant les extrémités de l'arête principale et les sommets de la base, l'angle du dièdre formé par les deux faces limitées par l'arête principale des pentaèdres d'une première paire étant supplémentaire de celui du dièdre homologue des deux autres pentaèdres formant une deuxième paire, les quatre pentaèdres composant la cellule étant juxtaposés avec coïncidence de leurs arêtes principales, les pentaèdres de la première paire étant disposés en opposition mutuelle de part et d'autre de ces arêtes confondues en une arête commune, de même que ceux de la deuxième paire, les pentaèdres se succédant autour de cette arête commune accolés par des faces appartenant aux dièdres précités;

la cellule cloisonnée se répète suivant la direction perpendiculaire aux plans des bases de la première paire de pentaèdres opposés dans la cellule, pour former un barreau de cellules dans lequel celles-ci sont accolées par les faces formées par lesdites bases, disposées en coïncidence;

le barreau de cellules se répète suivant la direction perpendiculaire aux plans de bases de la deuxième paire de pentaèdres des cellules du barreau, pour former une nappe de barreaux dans laquelle les cellules des barreaux contigus sont accolées par les faces formées par lesdites bases, disposées en coïncidence; enfin,

la nappe de barreaux se répète, dans la direction perpendiculaire aux deux directions précédentes, avec un certain décalage transversal entre deux nappes contiguës, une nappe se déduisant d'une nappe contiguë par une double translation définie par la somme d'un premier vecteur coïncidant avec l'arête principales commune des quatre pentaèdres d'une cellule et d'un deuxième vecteur coïncidant avec l'une des quatre arêtes de ceux-ci qui partent de l'extrémité du premier vecteur.

D'une manière générale, une construction dotée d'une structure selon l'invention comprendra avantageusement une enveloppe délimitant son volume. L'enveloppe peut faire partie intégrante de la structure.

Tous les plans sécants définissant les cellules présentent, selon plusieurs axes, une continuité jusqu'aux limites de l'enveloppe. L'enveloppe est divisée en éléments dont les plans consécutifs, d'épaisseurs ou de nature semblables ou différentes, sont assemblés en combinaisons pouvant communiquer entre elles ou être isolées, suivant les caractéristiques recherchées de la construction ainsi formée.

Selon l'invention, la structure est constituée d'un assemblage de cellules identiques juxtaposées de façon répétitive dans les trois directions de l'espace pour former une structure cellulaire alvéolaire.

Les cellules ont, dans des plans perpendiculaires à deux de ces directions, des sections hexagonales et une section en losange dans une troisième direction. On a ainsi une structure multidirectionnelle, bi ou tridirectionnelle.

Les cellules peuvent être fermées ou communicantes librement ou à travers des clapets directionnels ou des fusibles sous forme de zones de rupture à la chaleur, à la pression, etc...
Les parois des cellules peuvent être rigides ou souples.

Dans le cas de cellules souples communicantes, on obtient une structure souple gonflable ou dégonflable par de l'air, de l'eau ou tout autre fluide.

L'invention a également pour objet un procédé de fabrication d'un élément du type ci-dessus. Dans un mode de réalisation du procédé selon l'invention, la structure peut être réalisée par assemblage direct d'éléments plans ou préformés, par collage, soudage ou tout autre moyen.

Selon un autre mode de réalisation de l'invention, la structure peut être formée par un empilage d'éléments plats, dont certains au moins sont convenablement découpés, les éléments étant collés ou soudés les uns aux autres sur certaines parties de leurs surfaces, puis l'ensemble est dilaté,par introduction sous pression d'un fluide approprié, dans le cas où les cellules sont communicantes, ou par dégagement de gaz ou développement de matière expansible in situ dans le cas où les cellules sont fermées, l'expansion pouvant être déclenchée par tout moyen : chaleur, pression, choc, rayonnement, radiation, etc...
Un élément à cellules ouvertes peut être utilisé comme ébauche pour former un moule, puis être détruit par tout moyen : dissolution, sublimation, liquéfaction, etc........ Le moule servant alors à faire une réplique de l'élément d'origine puis étant détruit à son tour ou conservé.

Les éléments de structure selon l'invention peuvent être utilisés dans des domaines d'application nombreux et divers.

A titre d'exemples non limitatifs, on peut citer des constructions industrielles, stratégiques, agricoles, individuelles ou collectives, anti - sismiques, fixes ou démontables, des fondations, des panneaux fixes ou mobiles tels que des portes de sécurité, de hangar, de blindage, planchers, poutres, poteaux, etc......, en mécanique des arbres de transmission, bancs de précision, marbres, bâtis de machines, de moteurs, de turbines à gaz, etc... Il y a des applications anti-radiations, thermiques, acoustiques,etc........, aéronautiques et spatiales (cellules, ailes, gouvernes, planchers, cloisons ), des citernes, des conteneurs de transport,de confinement etc, en biotechnologie, mise en forme de nouveaux matériaux, polymères, élastomères, colles, mousses, céramiques armées ou non, métaux ou alliages spéciaux ou traités, en informatique, armoires de conception modulaire à éléments tridimensionnels incluant leurs propres circuits de refroidissement, en électricité des applications aux rayonnements, aux micro-ondes, aux pompes à chaleur etc..., en transports, des conteneurs, des dirigeables, des embarcations pneumatiques en structures gonflables, en industrie alimentaire des éléments de filtration pour toutes les applications utilisant une différence de pression importante telles que : osmose inverse, ultrafiltration, microfiltration, ensemble ou séparément, dans les industries de la mer, des structures off-shore, des rehaussements d'ouvrages existants, des coques, mâts, pontons, etc dans les industries de l'amélioration des conditions de vie et de travail, des cloisons d'isolation phonique, thermique, etc....

D'autres caractéristiques de l'invention apparaîtront au cours de la description qui va suivre, donnée à titre d'exemple non limitatif, en regard des dessins annexés, de quelques exemples de réalisation, et qui fera bien comprendre comment l'invention peut être réalisée.

Sur les dessins,

La Figure 1 est une vue en perspective d'un mode de réalisation représenté par deux séries de cylindres à section hexagonale, se coupant à angle droit ;

La Figure 2 est une coupe montrant la disposition des cylindres représentés sur la Figure 1 ;

La Figure 3 est une vue en perspective d'un mode de réalisation représenté par trois séries de cylindres dont une a une section en losange ;

La Figure 4 est une coupe montrant la disposition des cylindres représentés sur la Figure 3 ;

La Figure 5 est une vue en perspective d'un volume obtenu par le procédé tel que détaillé en Figure 3 ;

La Figure 6 est une vue en perspective représentant un détail de l'élément selon l'invention, conformément à un mode de réalisation de la Figure 1 ;

Les Figures 7, 8, 9 et 10 sont des vues illustrant un procédé de réalisation d'un élément tel que représenté sur la Figure 1 ;

La Figure 11 représente en perspective une première réalisation de l'invention, un élément tubulaire pouvant servir de poteau, de mât, d'arbre de transmission, etc...

La Figure 12 représente en perspective une réalisation de l'invention, une armoire électronique thermostatée ;

La Figure 13 est une vue en perspective d'une voûte avec arrachements partiels comportant une porte non plane selon l'invention ;

La Figure 14 est une vue en perspective montrant la disposition de la porte sous la voûte ;

La Figure 15 est une coupe de la porte selon l'invention et sa disposition sous une voûte ;

La Figure 16 est une vue de face de La cloison de sectionnement représentée sur la Figure 16 ;

La Figure 17 est une vue de face d'un autre mode d'aménagement de la cloison de sectionnement représentée sur la Figure 15 ;

La Figure 18 est une vue en perspective d'une porte selon l'invention, constituée de plans inclinés ;

La Figure 19 est une coupe d'une porte sous une voûte, selon l' invention, utilisant l'inertie variable pour son ouverture et sa fermeture ;

La Figure 20 est une coupe d'une porte dont les mouvements sont accompagnés par des vérins ;

La Figure 21 est une coupe verticale de deux des quatre sections d'une ouverture selon l'invention telle que représentée sur la Figure 22 ;

La Figure 22 est une coupe horizontale des quatre éléments assemblés selon la Figure 27 ;

La Figure 23 est une coupe d'une ouverture selon l'invention, située sous le niveau du sol ;

La Figure 24 est une coupe partielle d'empilements et de juxtapositions de cylindres formant cloisons selon l'invention ;

La Figure 25 est la même disposition que la Figure 24 mais avec une surface à plans inclinés selon l'invention ;

La Figure 26 est une coupe verticale d'un container selon le milieu de son axe longitudinal ;

La Figure 27 est une coupe verticale d'une disposition d'accès à l'intérieur d'un ensemble à plusieurs volumes selon l'invention ;

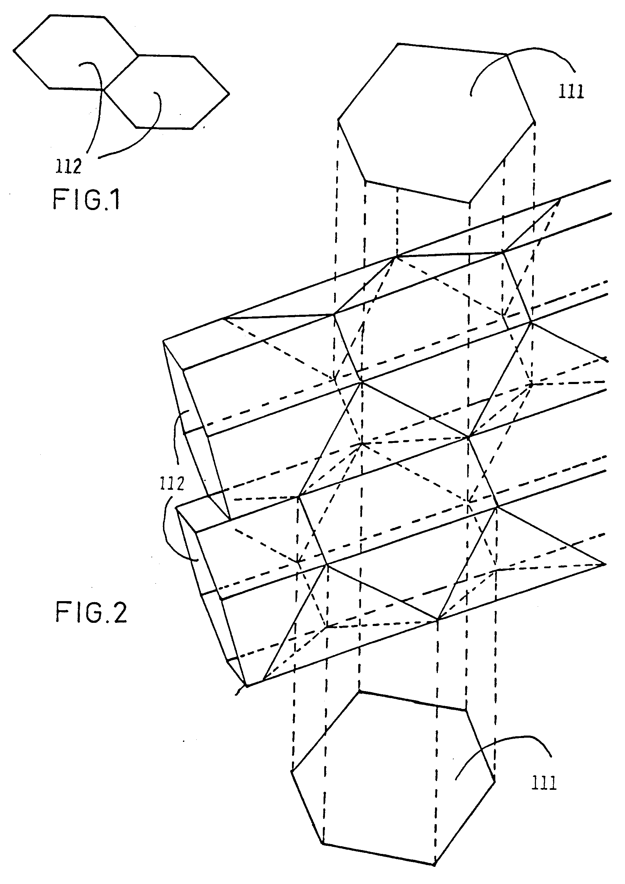

Dans la forme de réalisation de la Figure 1, selon la disposition représentée sur la Figure 2, les cellules sont définies par les intersections de cylindres à section polygonale: des cylindres hexagonaux verticaux 111 et des cylindres hexagonaux horizontaux 112. Les hexagones sont réguliers et ont tous la même dimension. Les cylindres parallèles à une direction sont juxtaposés et ont chacun une paroi en commun avec un des cylindres adjacents. Un tel élément présente une résistance particulièrement élevée dans au moins les deux directions d'axes des cylindres.

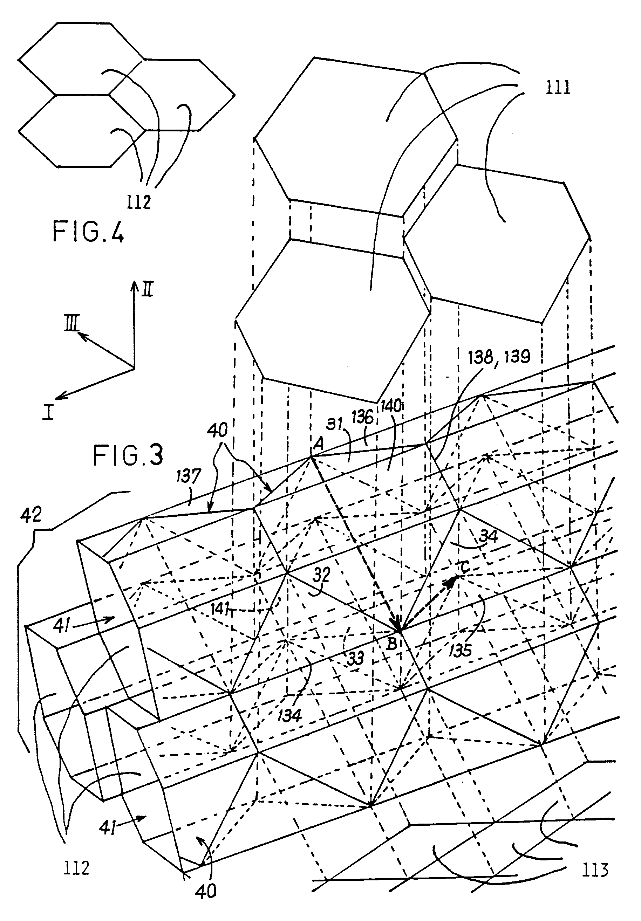

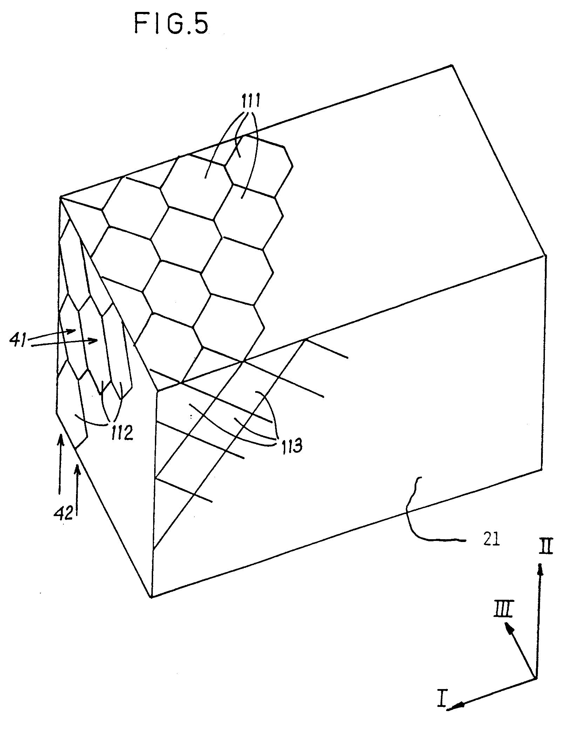

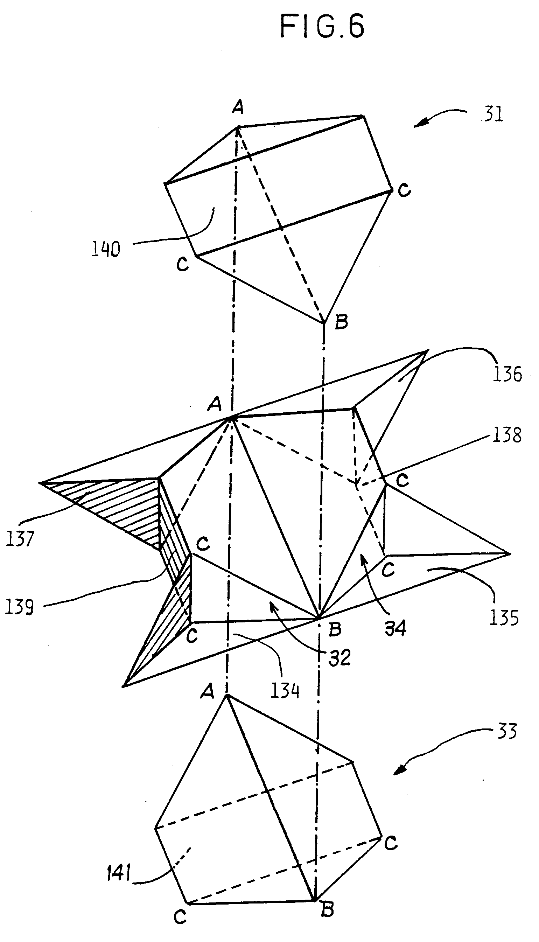

Comme représenté sur la Figure 3, selon la disposition de la Figure 4, les deux directions d'axes des cylindres verticaux 111 et horizontaux 112, sont coupés, dans une troisième direction, de cylindres 113, à section en losange. Une telle structure, qui présente une résistance particulièrement élevée dans trois directions d'axes des cylindres formant un volume 21 tel que représenté en Figure 5, est constituée par un assemblage de cellules cloisonnées 40 dont chacune se compose (Fig. 6) de quatre pentaèdres identiques 31, 32, 33, 34, mutuellement accolés autour d'une arête principale commune AB. Ces cellules sont juxtaposées suivant la direction I, des cylindres 112, avec coïncidence des faces rectangulaires 138, 139 de l'une de leurs deux paires de faces rectangulaires opposées, de façon à former des barreaux 41 parallèles à cette direction. Ces barreaux sont à leur tour juxtaposés suivant la direction II des cylindres 111, de façon à former des nappes de barreaux 42 s'étendant parallèlement à cette direction, les barreaux d'une nappe étant accolés par les faces rectangulaires de l'autre paire de faces rectangulaires 140, 141 des cellules 40. Enfin, les nappes 42 sont juxtaposées suivant la direction III des cylindres 113, une nappe se déduisant d'une nappe adjacente par une double translation (Fig. 3) suivant l'arête principale AB d'une cellule 40, puis l'une des arêtes BC de cette cellule qui joignent le sommet B et les sommets C des faces rectangulaires 138, 139 situées du côté du sommet B (Fig. 6).

Des cellules 40 ainsi juxtaposées dans les trois directions I, II, III laissent entre elles des vides en forme de tétraèdres 134, 135, 136, 137, de sorte que la structure est au total formée par un assemblage de pentaèdres identiques réunis par groupes de quatre et de tétraèdres identiques interposés entre les groupes de pentaèdres.

Tous les éléments d'une telle structure peuvent être réalisés en matériaux souples ou rigides. Dans le cas de matériaux rigides, ils peuvent être construits par assemblage d'éléments découpés, plans ou préformés et rendus solidaires par tous moyens, collage, soudure par vibrations, lasers, faisceau d'électrons, etc... ou analogue.

En mode mixte, en parties rigides et en parties souples, ils peuvent aussi être réalisés par gonflage ou par expansion.

Une telle construction est réalisable par collage ou par soudure.

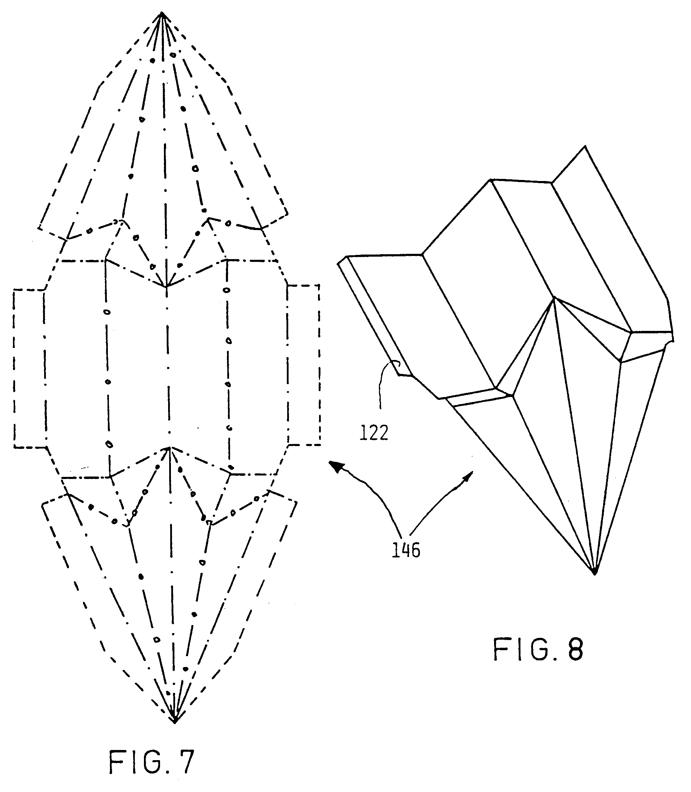

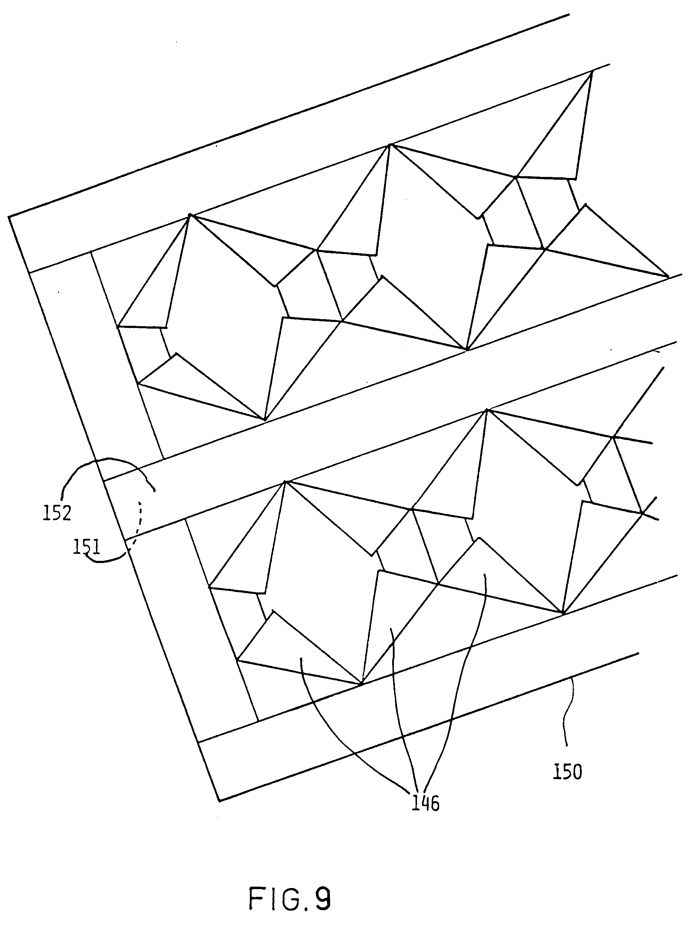

Les Figures 7 à 10 illustrent un procédé de réalisation d'un élément structurel tel que celui de la Figure 3. Des pièces 146 (Figure 7) correspondant aux faces ombrées 137a, 139 et 134a de la Figure 6, convenablement découpées selon le pointillé de la Figure 7 et pliées selon un pliage en avant le long de tirets espacés de points, selon un pliage en arrière le long de tirets espacés de ronds représentées partiellement pliées telles que figurant sur la Figure 8, sont collées par leurs bords, selon la Figure 9, sur une feuille 150 suivant des rangées parallèles dans lesquelles elles sont orientées en alternance dans un sens et dans l'autre. On réalise plusieurs ensembles identiques, on les superpose en collant deux feuilles adjacentes ensemble suivant des bandes parallèles aux rangées de pièces 146, la bande 152 de la feuille supérieure, placée au milieu des pièces 146 est collée à la bande 151 de la face inférieure, séparant les groupes de pièces 146.

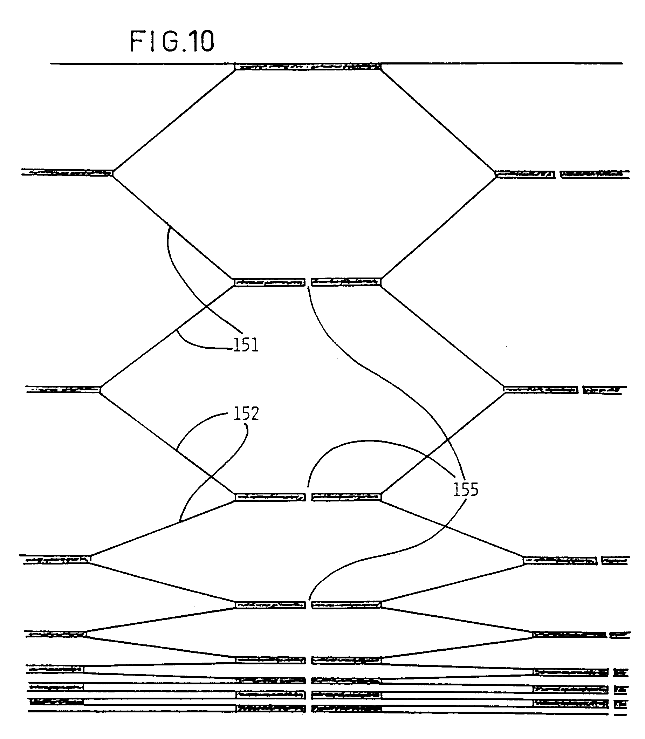

L'opération d'expansion est schématisée sur la Figure 10 (les cellules sont représentées communicantes par des ouvertures 155).

Dans le cas d'une structure souple à cellules communicantes, on peut injecter dans la structures une matière liquide polymérisable (hors les conditions de polymérisation) puis, selon le réglage thixotropique et l'imprégnation des parois, on vidange le liquide de sorte qu'une certaine quantité subsiste uniformément sur les parois. Pour l'utilisation, on gonfle dans les conditions de polymérisation et la structure se rigidifie.

Comme il est indiqué précédemment, toutes les structures peuvent être utilisées telles qu'ainsi décrites : souples gonflables et dégonflables, souples rigidifiables avec ou sans moule extérieur, ou rigides.

On peut aussi utiliser une structure comme ébauche, s'en servir pour faire un moule en la remplissant d'un substratum, puis éliminer la structure ( par sublimation, dissolution, fusion, etc...). Il reste un moule en substratum, qui permettra de faire une nouvelle structure par moulage, ce qui lui confère des propriétés mécaniques différentes. On peut mouler des métaux, des alliages, des matières et résines armées de fibres orientées ou non, etc..... Le moule en substratum est ensuite éliminé par tout procédé convenable : dissolution, sublimation, etc... ou simplement conservé.

Dans une variante, le substratum peut, lui-même, être expansé par la température, la pression, etc..., après l'injection de la matière durcissable et exercer dans le moule contenant le volume une pression sur toutes les parois de la structure, renforçant encore les qualités mécaniques de l'ensemble.

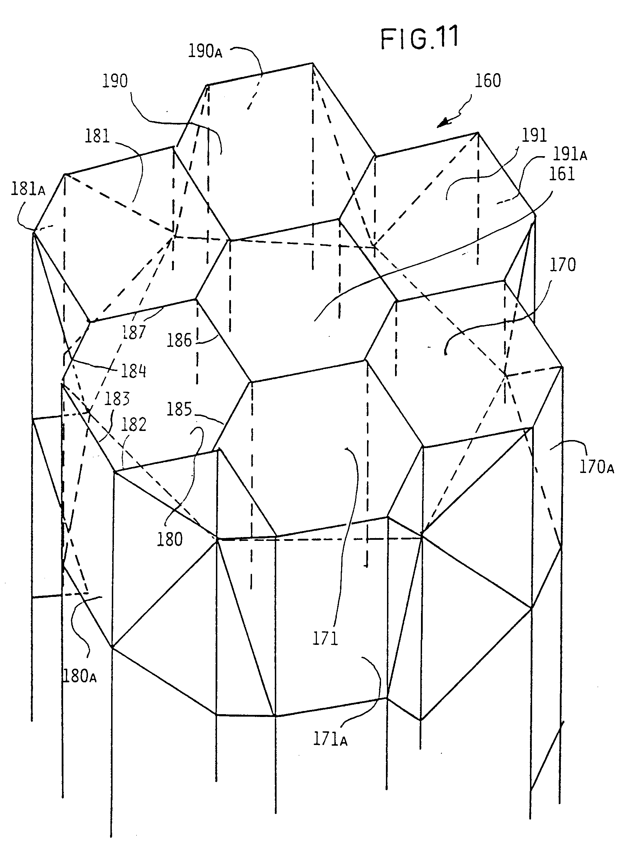

La Figure 11 représente schématiquement, en perspective, un ensemble de sept cylindres hexagonaux formés par sept barreaux assemblés et réticulés conformément à la présente invention. On peut ainsi réaliser des corps à axe de symétrie central comme des poteaux, des mâts, etc....,fixes ou pouvant tourner sur eux-mêmes tels que des arbres de transmission, des appareils de centrifugation, etc...... Le nombre de cylindres n'est pas limitatif, on peut prévoir davantage de couches concentriques avec ou sans complément de cylindres à sections différentes en périphérie

Applications :

Parmi les nombreuses applications de l'invention, on va décrire plus en détail, à titre d'exemples non limitatifs, un certain nombre de réalisations telles que l'exécution d'un banc de précision, la construction d'une voûte autoporteuse annulaire d'abri souple gonflable et dégonflable, une variante en disposition annulaire rigidifiable, la construction d'une porte de sécurité ou de hangar blindé avec pour variante une fermeture de silo, un élément de filtration et une armoire support d'électronique. Construction d'un banc de précision autoporteur, d'une grande rigidité et d'une stabilité dimensionnelle exceptionnelle.

En métrologie, dans les domaines aéronautiques et spatiaux, la recherche d'une grande rigidité associée au moindre poids est constante. De plus, l'emploi de moyens de très grande précision optiques ou autres implique l'utilisation de supports d'une très grande stabilité dimensionnelle dans des conditions d'utilisation très contraignantes d'accélération, de pression, de température, etc...

L'application du principe de l'invention permet de proposer notamment, une application à une structure de ce type, dans laquelle les faces de l'enveloppe sont composées d'un treillis de bandes superposées et croisées de fibres parallèles de sorte que deux, au moins, des axes des plans de fibres soient perpendiculaires, ou que, selon plusieurs directions, parallèlement au même plan, chacun d'eux fasse un angle égal avec l'axe de la direction longitudinal d'un des plans de fibres.

Les faces de l'enveloppe sont parties intégrantes d'une âme à cellules orientées perpendiculairement, dans les trois directions de l'espace, chacun des plans qui constituent les cellules est lui-même comosé de bandes de fibres parallèles, d'un bout à l'autre du volume. Les fibres sont orientées par tous moyens pneumatiques, mécaniques ou autres comme l'effet d'un champ magnétique et elles sont assemblées et rigidifiées à l'aide d'un matériau provisoire de solidarisation dans une proportion qui sera celle du matériau de solidarisation définitif.

La diversité et les caractéristiques des matières et des fibres utilisables sont considérables pour la clarté de l'exposé , sans que ces désignations soient limitatives, nous appellerons les fibres A, la matrice finale B ( par exemple du carbone/carbone) d'un coefficient de dilatation sensiblement nul (par exemple inférieur à 10 $^{-6}$) pour une différence de température de plusieurs dizaines de degrés centigrades. Le substratum C pourra être une mousse expansible phénolicosiliconée, expansible et durcissable à 60 ° C, fusible à 300 ° C, les matériaux de construction d'ébauche pourront être un polyéthylène D thermoformable à 100 ° C et une colle E, tous deux fusibles à 150 ° C, une solution d'amidon F pourra être le matériau de solidarisation permettant l'organisation et la manipulation des fibres.

Pour des formes simples, on peut assembler des volumes façonnés avec C et maintenus solidaires par des cales collées en matière B si les cellules doivent rester isolées ou des cales en matière C pour permettre des communications entre les cellules.

Pour des formes plus complexes ou comportant des surfaces gauches, à l'aide de D, dans les épaisseurs requises, on thermoforme les plans extérieurs dans un moule, on perce, on introduit et colle des manchons taraudés intérieurement, au travers du moule et des plaques de D en débouchant largement dans les volumes définissant les cellules projetées. Avec D, les cellules sont assemblées par plans, à l'aide de E en prenant soin de situer les ouvertures manchonnées dans les cellules, en sorte que l'ensemble puisse être complètement rempli par le fluide C au travers des orifices inférieurs et en sorte que, le volume, incliné à la vidange, retienne dans chaque cellule, une quantité suffisante de fluide C. On monte des goujons en quantité suffisante pour centrer le moule futur et, sous la même inclinaison, on étuve à 60 ° C en provoquant l'expansion et le durcissement de C, puis on étuve à 150 ° C fondant et éliminant D et E. Les volumes sont maintenus solidaires par les orifices de communication, remplis de C, et l'ensemble est maintenu centré dans le moule par les goujons fixés en C.

Après repérage des longueurs des goujons de centrage on extrait l'âme du moule et des bandes de fibres sont engagées dans une première série de plans parallèles en respectant les canaux de communication. On dissout F selon les lignes de croisement avec les autres plans perpendiculaires dans lesquels on engage de nouvelle bandes, et on dissout de nouveau l'apprêt F selon les nouvelles lignes de croisement avec les autres plans, et ainsi de suite Jusqu'à ce que l'ensemble des plans laissés vides par la disparition de D soit garni.

Un treillis constitué de plusieurs bandes de fibres superposées et croisées est disposé sur chaque face, en veillant à écarter les fibres aux points de passages des goujons et en les croisant avec les fibres des bandes déjà en place. Après avoir rabattu les fibres dans les directions adéquates, l'ensemble est replacé et centré dans son moule.

Le moule est refermé et l'apprêt F est dissous à l'eau chaude et, après séchage, on injecte la matrice B qui solidarise les fibres en durcissant. Le moule remis à plat, la matière C est éliminée par un passage à l'étuve à 300 ° C.

L'ensemble est démoulé et la face de travail est rectifiée dans les tolérances prescrites avec au moins une ouverture maintenue ouverte vers l'extérieur afin d'éviter des contraintes thermiques internes préjudiciables à la solidité et à la stabilité dimensionnelle du volume obtenu.

On peut ensuite remplir de tous fluides ou de métaux liquides .

Application à une structure souple gonflable.

Les constructions et abris souples sont très utilisés : tentes, voûtes de grandes dimensions, etc.... Ils nécessitent généralement d'être maintenus en forme sur un chassis, par une surpression interne de tout le volume qu'ils définissent ou dans des cylindres parallèles qui offrent une faible résistance selon les lignes qui les joignent. Les déperditions calorifiques y sont d'autant plus considérables que les volumes sont importants. Les perforations par frottements et les déchirures provoquent leur effondrement ou leur destruction.

Une application selon le principe de l'invention permet d'édifier une telle structure auto-porteuse, à faible coefficient de déperdition calorifique, par l'utilisation d'une structure cellulaire formant des volumes isolés par des clapets directionnels qui évitent son affaissement en cas de perforation et dont la disposition améliore considérablement i'isolation thermique.

Une structure gonflable, selon le principe de l'invention, organisée en cellules communicantes, avec ou sans clapets, peut, après sa construction, être rigidifiée selon deux modes au moins. D'abord, selon la méthode décrite dans l'application avec une mousse expansible en prenant soin d'effectuer des ouvertures dans chaque cellule, en sorte que l'ensemble puisse être complètement rempli des composants de la mousse non encore expansée et de façon que le volume, après sa vidange, retienne dans chaque cellule, une quantité suffisante de produit, puis on provoque l'expansion.

Une autre méthode consiste à choisir une résine G et un durcisseur H tels que mélangés, la polymérisation ne puisse intervenir qu'en présence d'une matière I. Une matière J laisse l'ensemble G et H indifférent. La structure est remplie de G et H en proportions convenables, en réglant le degré thixotropique de manière qu'une certaine quantité subsiste sur toutes les parois des cellules. L'excès de G et H est vidangé et remplacé par J. On dégonfle pour stocker et transporter. Pour la mise en service, on gonfle en injectant I qui provoque le durcissement de toutes les parois intérieures.

Lorsqu'on désire protéger un accès, on peut armer la porte de fermeture de béton ou d'un épais blindage.

Le poids en devient considérable, les difficultés d'usinage des aciers de blindage de grande épaisseur en limitent l'usage; leur déformabilité ne permet pas une bonne étanchéité des volumes protégés et oblige la fermeture, soit à coulisser sur des rails en façade, soit, sous une voûte, à rester perpendiculaire au sol, en deux vantaux tournant autour de gonds d'axes verticaux en étant supportés par des chemins de roulement en arcs de cercle. De plus, sous une voûte, le développement du mouvement de l'ouverture, empêché par le rayon de la voûte, oblige à agrandir considérablement celle-ci. Dans les deux cas, toute la partie antérieure de l'ouvrage et sa fermeture sont très vulnérables. Dans une autre technique, le prix et les conséquences de l'utilisation des blindages actifs en limitent l'usage.

Une autre application non limitative du principe de l'invention, donnée à titre d'exemple, concerne une fermeture de sécurité, comme une porte de hangar blindé ou toute protection offrant une résistance importante à la pénétration de projectiles, aux effets de souffle, aux ondes de choc, aux radiations, qui soit indéformable et autoporteuse pour assurer, par sa grande rigidité, une bonne étanchéité à la pénétration (ou à la sortie) de produits chimiques ou bactériologiques en offrant le meilleur coefficient de résistance à la pénétration aux radiations. Elle doit aussi être manoeuvrée dans le plus bref délai possible.

C'est l'objet, dans cette application, du principe de l'invention, de l'exécution d'une fermeture satisfaisant à ces contraintes.

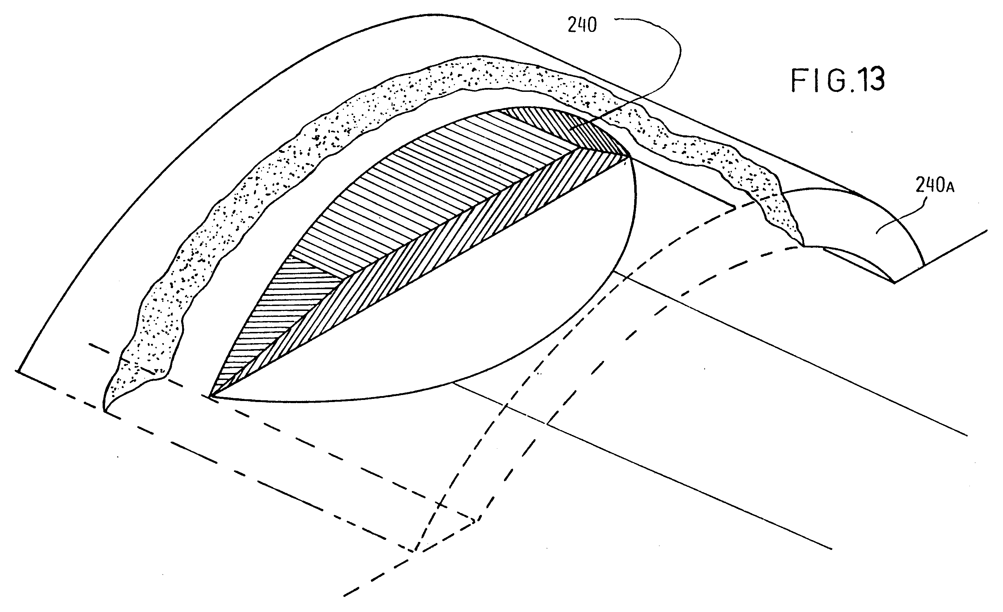

Sur la Figure 13 on voit une construction en voûte 240a qui peut être, par exemple, l'accès de sécurité d'un site stratégique, partie d'un hangar destiné à protéger des matériels militaires, l'entrée d'un abri de personnel à protection anti-nucléaire, anti-bactériologique, anti-chimique (N.B.C.) etc...

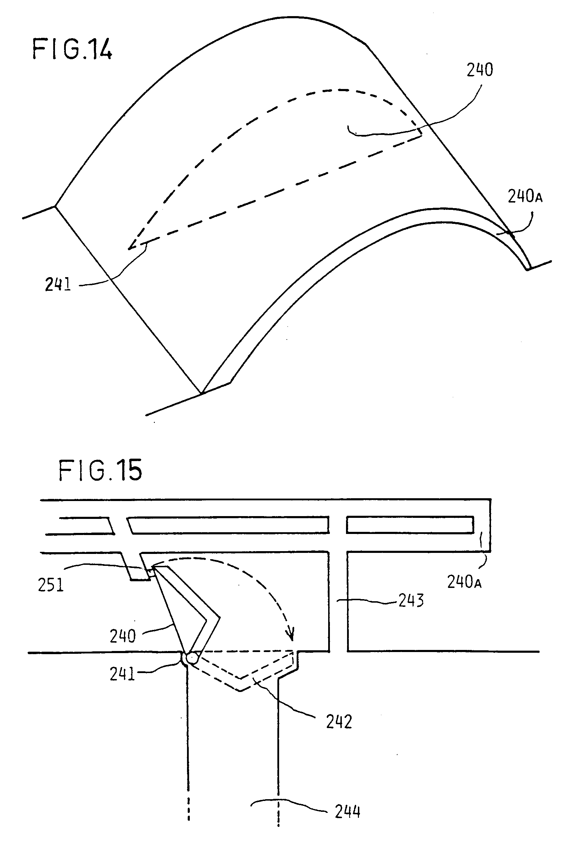

Cette voûte est équipée d'une porte 240 sur la Figure 14, maintenue à sa partie inférieure par des charnières horizontales 241 lui permettant de pivoter autour de leur axe et de se rabattre jusqu'en position horizontale 242 libérant le passage (Figure 15).

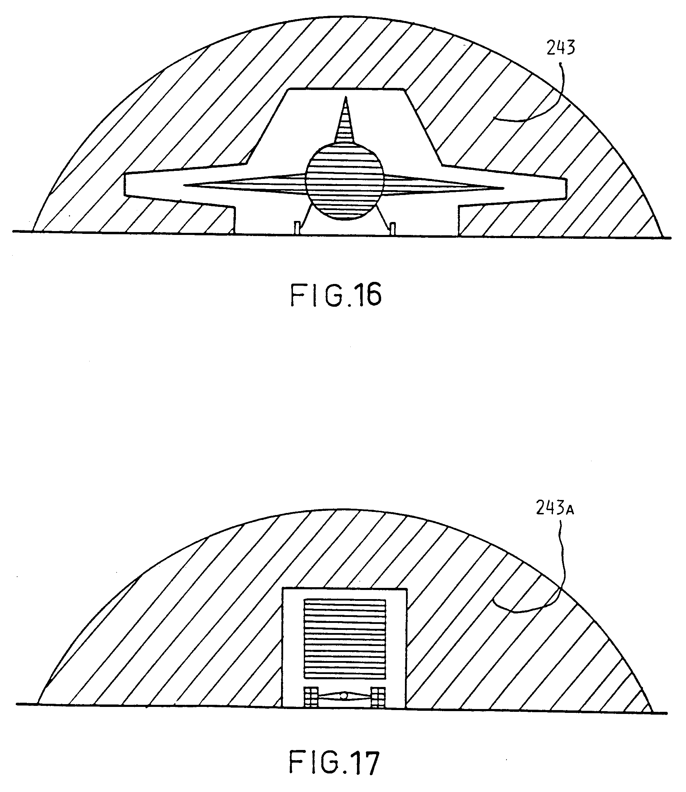

Le volume décrit par le mouvement d'ouverture et de fermeture est très réduit et permet d'installer utilement entre la façade de la voûte et le plan de la porte relevée, une cloison de sectionnement 243, percée du seul passage utile pour un avion par exemple, Figure 16, ou une cloison 243 a (Figure 17 ) pour un camion, ou tout autre profil qui limite les effets d'une explosion au sol devant la voûte ou d'une charge explosive.

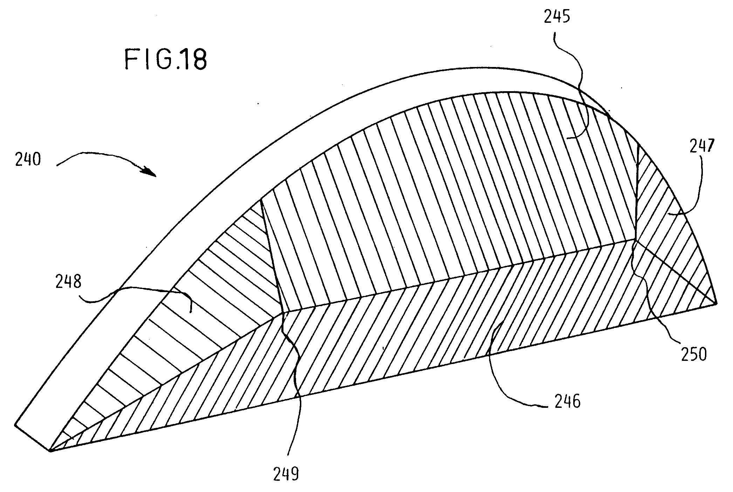

La partie du sol du hangar, couverte par la porte rabattue ouverte est utilement creusée en puit 244 (Figure 15) de sorte que le volume situé entre la cloison de sectionnement et la porte soit augmenté au maximum, de façon que les pressions exercées sur les surfaces de ce volume d'expansion soient les plus réduites possible. l'organisation et les incidences des plans constitutifs 245, 246, 247, et 248 de la face avant (Figure 18) sont constituées proportionnellement à la résistance recherchée et en fonction du retrait de la porte par rapport à l'entrée de la voûte de sorte que, lors d'une explosion au sol, devant la voûte, dont les effets sont réduits par la cloison de sectionnement 243 et les pressions diminuées par l'expansion dans le volume 244, les contraintes subies par les plans de la fermeture ne provoquent aucune sollicitation au mouvement dans les directions du plan moyen de la porte.

A la limite, si le retrait de la porte sous la voûte est très important, les forces exercées deviennent parallèles à l'axe de symétrie du demi-cylindre de la voûte, les extrémités 249 et 250 de la droite séparant les plans 245 et 246 se rejoignent en un point situé au centre de la porte.

Dans l'exemple représenté sur la Figure 18, chacune des parties de la porte limitée par les plans 245, 246, 247 et 248 est constituée d'une enveloppe étanche comportant par exemple, dans la représentation choisie, trois couches de cellules à section hexagonale dont les arêtes forment un angle de 30 degrés entre elles et dont l'axe des cylindres qu'elles constituent est dans un plan parallèle à l'axe de symétrie de la voûte. Une deuxième série de cylindres coupe la première en sorte que les axes des cylindres la composant soient perpendiculaires à l'axe de symétrie des cylindres de la voûte, une troisième série de cylindres, à section en losange dont les axes des cylindres sont perpendiculaires aux deux autres directions, conformément à la Figure 3.

Les cellules de la porte peuvent être remplies de toutes matières, mélanges, etc... Cependant si on utilise des gaz ou de l'air, la porte, en position de fermeture, sera légèrement inclinée vers la sortie de la voûte de sorte qu'elle aura constamment tendance à s'abattre en s'ouvrant.

La porte, pleine de liquide, fermée, est inclinée vers l'arrière (Figure 15) de sorte qu'en vidangeant une partie du du volume, le centre de gravité de l'ensemble se déplace vers l'avant de la voûte en provoquant l'ouverture de la porte.

La face d'appui, en position fermée, sera équipée d'amortisseurs 251 qui, sous l'effet du souffle d'une explosion, répartissent les pressions absorbées, à l'intérieur du volume de la porte par des orifices calibrés au-travers des plans constitutifs des cellules, de sorte que la restitution de l'énergie subie se fasse lentement pour éviter des rebonds intempestifs. La charnière 241 peut aussi être montée flottante sur des amortisseurs.

Pour assurer l'étanchéité N.B.C. un joint hyperfréquence sera utilement disposé entre la face d'appui de la porte et la structure.

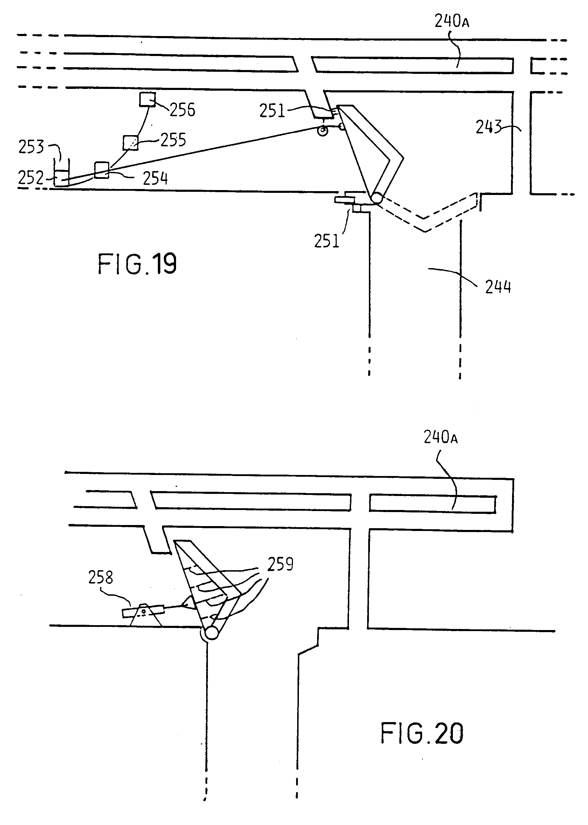

Une série de contrepoids, représentés sur la Figure 19 dont le premier 252 comporte un volume vidangeable 253 permet l'ouverture et la fermeture aisées comme il est expliqué ci-après.

En vidangeant le volume 253, le contrepoids 252, guidé, parcourt une certaine distance et rencontre le contrepoids 254 qui est retenu à une certaine hauteur, puis rencontre le contrepoids 255, puis le 256. L'action des contrepoids s'accroit avec l'augmentation du poids de la porte qui s'incline et le profil du guide 257 ralentit efficacement le mouvement jusqu'à l'ouverture complète.

Le poids des contrepoids vidangés est légèrement inférieur au poids de la porte en position horizontale.

Pour fermer, on remplit le volume 253, ou on vidange la porte du même poids, et l'ensemble rappelle la porte en position fermée : le contrepoids 256 ne redescend que jusqu'à sa position d'arrêt qui ne retient que lui, puis le 255, puis le 254 qui s'arrêtent chacun à leurs positions limites et le 252 revient en fin de course.

La porte, légèrement inclinée vers l'arrière est remplie à nouveau.

Cet autre aspect de l'utilisation de l'inertie variable ne limite ni le poids, ni les dispositions des contrepoids ou de leurs guides pas plus que les volumes vidangés.

Le même mouvement est aussi possible à l'aide de vérins 258 tels que représentés sur la Figure 20.

La partie arrière de la porte sera plane et la jonction de ce plan avec les faces arrières de la structure, ne devant résister qu'aux pressions des charges roulantes qu'elles supportent à l'horizontale, se fera soit par des cellules plus grandes à parois moins épaisses soit simplement, par des chandeliers fixés de part et d'autre (259 de la Figure 20).

L'ensemble fermé protège, de sorte que, dans le cas d'une explosion au sol, à l'entrée de la voûte, les pressions engendrées sont réduites par la cloison de sectionnement 243 et sont détendues dans le volume d'expansion 244.

Un projectile, tiré de l'entrée, selon une trajectoire sensiblement parallèle à l'axe longitudinal de la voûte, frappera la face avant de la porte selon un angle qui ne pourra être inférieur à 60 degrés. S'il pénètre dans la structure, il rencontre un plan armé orienté différemment au premier, puis encore un plan orienté différemment au second et ainsi de suite dans toute l'épaisseur de la structure.

Des plaquettes à haute dureté, comme des céramiques ou des résines armées comme des carbone/carbone, ou des sandwiches de différents matériaux à grande capacité de résistance thermique et mécanique, fixés sur les faces exposées de la fermeture empêchent la pénétration.

L'âme de la structure absorbe par déformation une partie de l'énergie reçue et la répartit dans tout le volume.

Des fluides dont le mouvement est gêné par des ouvertures disposées en chicanes aideront à l'absorption des forces exercées.

Des volumes de compression permettront la circulation des fluides et aideront aussi à l'absorption des pressions.

En conclusion, les changements successifs d'incidence et d'impédance empêchent la pénétration et le mouvement des fluides en circulation au travers d'orifices calibrés, disposés en chicanes, transforment toutes forces, y compris une explosion interne, en une répartition de pression à l'intérieur d'une sphère.

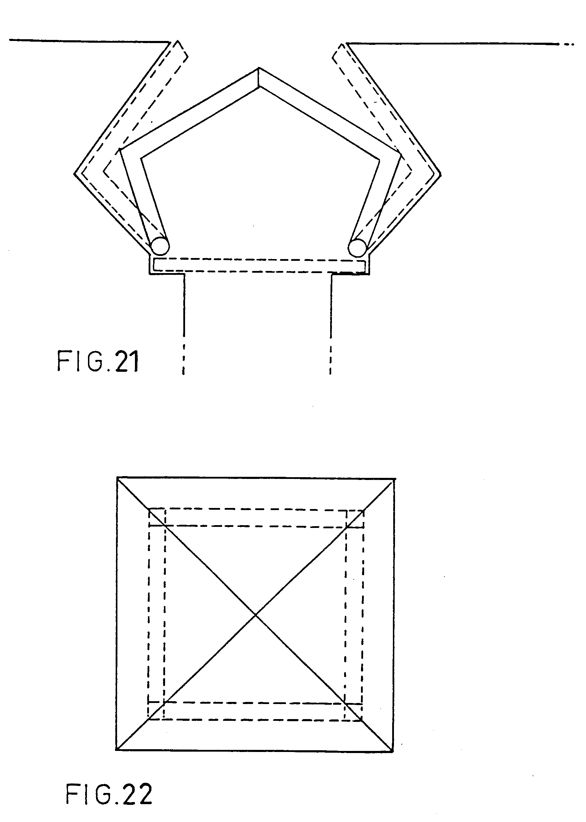

Dans une variante de l'application du principe de l'invention telle que décrite, plusieurs panneaux, disposés tels que représentés en coupe sur la Figure 21 et en plan sur la Figure 22 peuvent utilement être joints ensemble et protéger ainsi un cylindre vertical, tel qu'un silo, en permettant un effacement rapide et sûr de la fermeture autorisant l'éjection de tous corps.

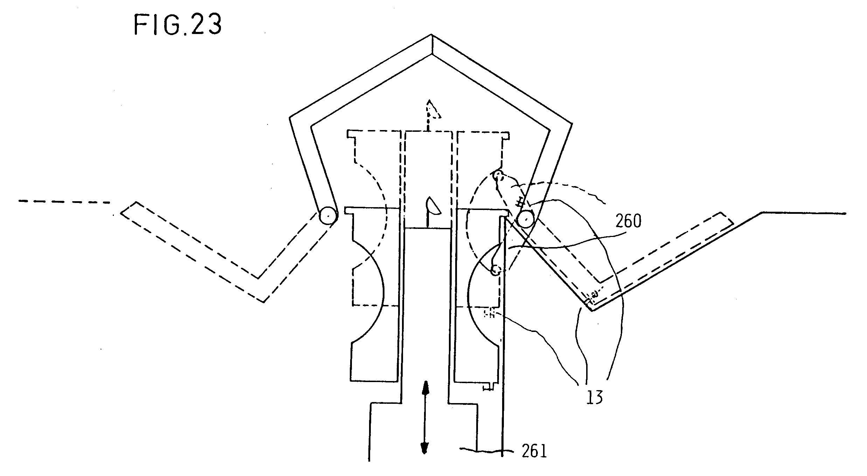

Lorsqu'il s'agit d'exposer pendant un court intervalle de temps un moyen quelconque tel qu'un émetteur d'ondes, de rayon laser, etc..., monté sur une plateforme commandée par un vérin 261 sur la Figure 23, s'élevant jusqu'au niveau du sol, puis après son action avec une liberté totale en site et en azimut, d'en assurer rapidement la protection en le réintroduisant dans le cylindre, les panneaux de fermeture seront utilement prolongés par des bras de levier 260 de sorte qu'indépendamment du mouvement provoqué par le déplacement du centre de gravité, les bras de levier aident à l'ouverture et à la fermeture sous l'action du support de l'élévateur 261 de la plateforme. Un autre exemple, non limitatif, permet, selon le principe de l'invention, la construction de containers de sécurité pour le transport et le stockage.

On connaît environ treize millions de composés chimiques dont cinquante à soixante mille sont utilisés commercialement. Les nouvelles connaissances moléculaires et cellulaires permettent d'en créer de cinq cents à mille annuellement. Les produits fabriqués en quantités industrielles sont : le chlore, l'ammoniac, l'acide cyanhydrique et le phosgène en énormes quantités ainsi que l'isocyanate de méthyle (M.I.C), le benzène, le trichlorophénol, la dioxyne, des gaz neurotoxiques, psychotropes, émétiques, etc...

Avec les gaz liquéfiés et les hydrocarbures, des millions de tonnes de matières dangereuses sont transportées annuellement et stockées.

Les containers de sécurité pour le transport des matières radio-actives sont en acier avec des épaisseurs de l'ordre de cent vingt millimètres, de forme cylindrique ; leur poids à vide atteint soixante dix tonnes pour être conformes à la règlementation, de façon à freiner les rayonnements, résister à une chute d'une certaine hauteur et à l'effet d'un feu d'hydrocarbures pendant une durée déterminée.

La recherche du meilleur rapport poids à vide/ poids en charge est particulièrement difficile. De plus, les protections au feu, aux radiations, aux gaz, aux agents chimiques et la présence constante d'inhibiteurs spécialisés à proximité paraissent difficilement conciliables si on recherche de surcroît une bonne résistance à des impacts éventuels de projectiles.

L'application du principe de l'invention permet de répondre à ces exigences concomitantes.

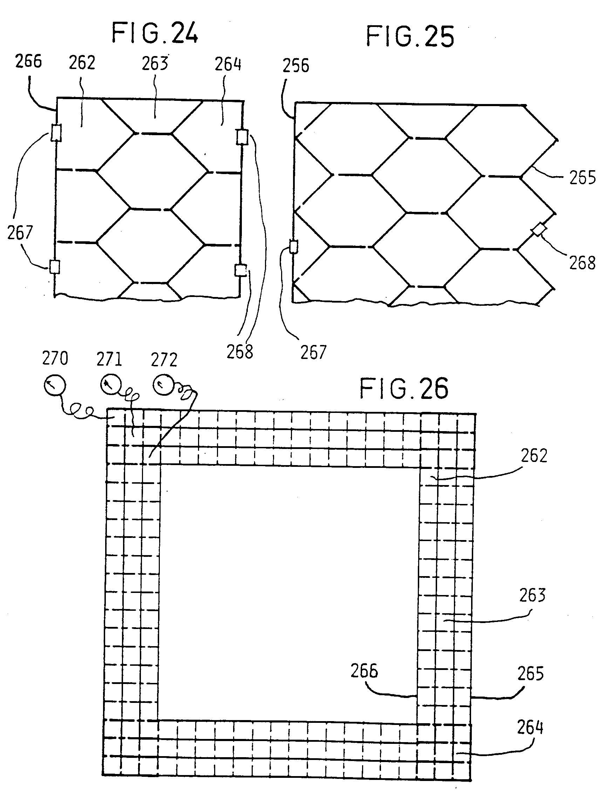

Par exemple, un container peut être construit, composé de plusieurs volumes tels que décrits, ou constitués de cylindres à section hexagonale tels que représentés sur la Figure 3, dans une disposition de la Figure 24 pour deux faces planes, ou de la Figure 25 de sorte que la face extérieure 265 puisse résister à des impacts de projectiles comme expliqué précédemment.

Les volumes 262, 263 et 264 sont isolés les uns des autres et les cellules les constituant communiquent entre elles.

Une coupe verticale (Figure 26), perpendiculaire à l'axe longitudinal du container fait apparaître trois enveloppes superposées, constituées de séries de cylindres 111, 112 et 113 (Figure 3).

Une matière A, dont le point critique est de 70° C, doit être transportée, protégée, et anihilée en cas d'accident. De plus A émet des radiations qu'une matière B arrête. La matière C est un inhibiteur de A. Le volume 263 peut rester inutilisé ou communicant avec le volume 262 ou le volume 264.

Le volume 264 est rempli d'un fluide comportant un agent d'extinction D. La cloison 266 est garnie de B ainsi que les parois inclinées des cellules du volume 262. C dans le volume 262 peut être thermostaté. Si A atteint son point critique, les fusibles libèreront C qui inhibera A en le confinant dans l'enceinte et le volume 262.

Si l'ensemble est soumis à une température extérieure excessive telle qu'un feu d'hydrocarbures, D en s'échauffant fait augmenter la pression du volume compris dans 264 qui libère au travers de fusibles à la pression 268, l'agent extincteur. Pour augmenter la sécurité de zones, les fusibles 268 peuvent en outre, être sensibles à la température.

Les faces 265 et celles orientées de même sens dans la structure peuvent être recouvertes de matières résistantes aux impacts comme décrit dans l'application des portes blindées.

Les faces 266 et celles orientées de même sens dans la structure peuvent être recouvertes de matières résistantes aux effets de A.

L'exemple n'est pas limitatif, toutes les combinaisons des applications sont possibles entre elles : matières de construction, matières de renfort, fusibles, pressions, températures, etc...

La structure comporte utilement, longitudinalement, latéralement et diagonalement, des lignes de cellules, à parois renforcées et plus épaisses qui constituent un châssis interne proportionnel au poids de l'ensemble et aux performances telles que recherchées.

Pour le transport à vide, l'ensemble peut être vidangé.

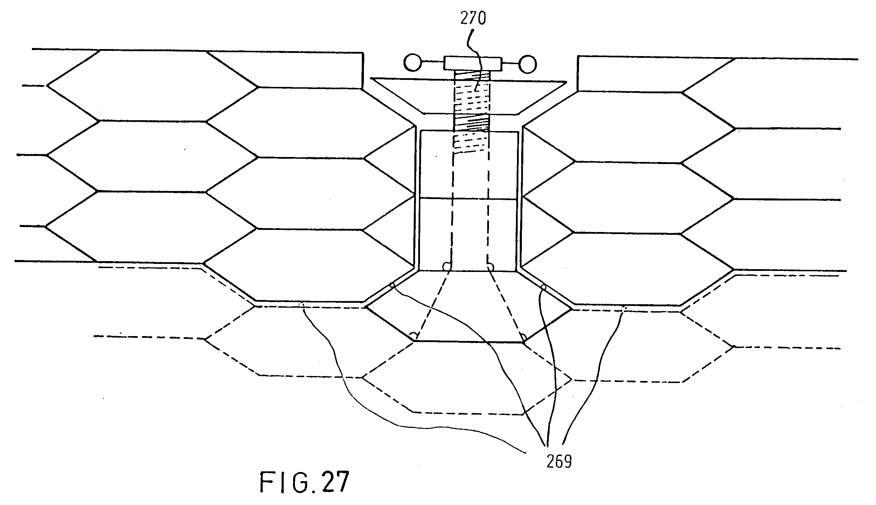

Des ouvertures ou des panneaux 269 sont joints par encastrement sans affecter la rigidité de l'ensemble selon le principe de la Figure 27. Ils peuvent être équipés de joints. Leur liaison peut être assurée par des goujons 270 passant selon les axes des cylindres de même sens.

Une autre application du principe de l'invention concerne des éléments de filtration ou de pervaporation. Les possibilités exposées ne sont pas limitatives.

Les filtres en acétate de cellulose ou en polymères présentent des contraintes thermiques et de faibles résistances aux différences de pression telles qu'on leur préfère par exemple des membranes minérales en carbone, zircone, alumine, en oxyde de titane, ets... avec des diamètres de pores très faibles (à partir de 20 angstroems). Les capacités des éléments de filtre en osmose inverse, micro-filtration et ultra-filtration sont limitées par les surfaces d'échange et les éléments sont caractérisés par leur fragilité relative.

La maitrise des porosités dans les matières constitutives ou par application d'un revêtement est, par contre très grande.

La grande résistance d'un élément de structure tel que représenté sur la Figure 11 ou dans des volumes tels que représentés sur les Figures 3 et 5, les importantes surfaces qui les caractérisent sous un faible volume, permettent, selon les porosités ou l'étanchéité des cloisons, de construire des éléments de filtres utilisables en osmose inverse, micro-filtration, ultra-filtration ou en combinaisons, en filtration frontale ou tangentielle.

Sur la Figure 11, les extrémités des cylindres verticaux étant obturées, des pressions exercées depuis l'extérieur vers le cylindre central, sont telles que les plans périphériques, à la porosité plus grande, subissent la différence de pression des fluides la plus importante, provoquant une filtration avec une pression résiduelle par rapport au cylindre central. Le fluide est déjà épuré et les cloisons du cylindre interne peuvent avoir une porosité plus faible.

Selon l'élément représenté sur la Figure 3, une des séries de cylindres 111, 112 ou 113 par certaines faces étanches, sert de drain pour l'évacuation des perméats.

On fabrique une série de cylindres 161, 170, 171, 180; 181, 190, 191 en corps macro-poreux, en céramique à porosité A (pores d'environ 15 microns), l'extérieur des faces 182, 183, 184 d'un cylindre 180, reçoit une couche d'acétate de cellulose ou de polymère ou une barbotine de céramique qui, après traitement présente par exemple, une porosité de 1000 angstroems. L'intérieur des faces 185, 186 et 187 reçoit aussi une couche présentant après traitement une porosité de 500 angstroems. On fabrique des inserts en support macro-poreux tels qu'ils s'engagent dans les tubes définissant les formes intérieures telles que représentées sur la Figure 3.

Leurs faces peuvent avoir des surfaces à porosités différentes ou être rendues étanches de façon à former des drains qui collectent les perméats. Ces inserts, par une liaison céramique forment avec la première série de cylindres un corps monolithique.

La disposition du type d'éléments faisant l'objet de l'invention permet, disposant de trois axes de cylindres, d'organiser, par la combinaison des surfaces poreuses et des surfaces étanches, une structure filtrante complexe avec ses drains incorporés.

Pour le décolmatage, dans le cas de l'utilisation de céramique et de barbotine, on envoie une contrepression dans les drains collecteurs en centrifugeant le fluide de nettoyage par une rotation autour de l'axe du cylindre 161 (Figure 11).

Autre application du principe de l'invention à l'industrie électronique.

Les supercalculateurs actuels sont construits selon une architecture dite de " Von Neuman " (SISD selon un mode séquentiel). Les futurs systèmes informatiques du traitement de la connaissance (KIPS), avec des architectures dites parallèles telles que S.I.M.D. ou M.I.M.D ou même L.A.U. se heurtent à deux problèmes physiques : l'emploi de composants bipolaires, très rapides, provoque une importante consommation électrique donc un fort dégagement de chaleur, et, les types modernes d'architectures séquentielles ou parallèles, nécessitent des cablages de connexions atteignant 700 kilomètres dans une seule unité.

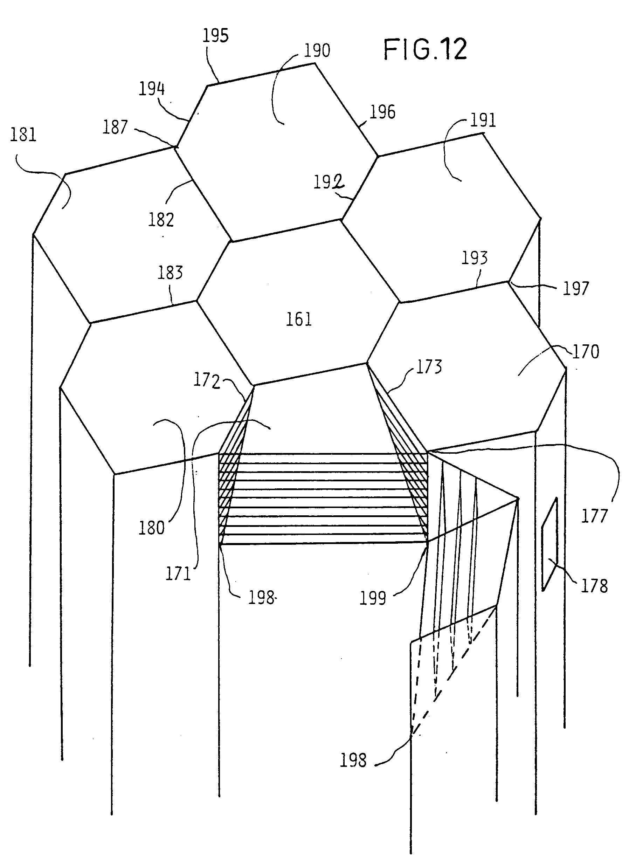

L'application du principe de l'invention trouve là, au plan de l'organisation physique à structure multidirectionnelle, une de ses applications, en corrélation étroite avec la conception technique des systèmes informatiques, particulièrement selon la représentation de la Figure 12.

Les tubes 161, 170, 180,190 font partie d'une même structure à substratum poreux (15 microns par exemple) qui sert de support structurel à l'ensemble. Les faces communes des cylindres 161 et 170, 161 et 180, 161 et 190 sont couvertes d'une couche à porosité de deux microns. Les trois autres faces du cylindre 161 sont recouvertes d'une couche à porosité de 0,5 micron.

Les faces 182 et 192 du cylindre 190, les faces 173 et 193 du cylindre 170, les faces 172 et 183 du cylindre 180 auront des porosités de 0,5 micron.

Toutes les faces extérieures 194, 195 et 196 du cylindre 190 seront étanches; il en est de même pour les faces extérieures des cylindres 170 et 180.

A l'aide d'ouvertures au travers des plans intérieurs(Figure 6) 138, 139, 137a, 134a et leurs symétriques dans les éléments 131 et 132 ainsi que sur les plans 143, 144 de l'élément 133 et leurs symétriques de l'élément 131, on régule un flux thermostaté de gaz froid, filtré, par exemple, de sorte que chacun des cylindres reçoive sur toute sa longueur, une pression égale de fluide.

La diffusion du fluide de refroidissement, injecté dans le cylindre 161 de la Figure 12, se fera dans l'ensemble de la structure, partie directement, partie au travers des parois des cylindres adjacents.

On calcule les porosités des faces communes des cylindres 161 à 170, 180, 190 en tenant compte des pertes de charges.

Les faces étanches des cylindres 170, 180, 190 peuvent, pour l'équilibrage des pressions, comporter des fenêtres d'échappement telles que 178 sur le cylindre 170, à faible porosité, incluses dans les parties étanches. Les cylindres peuvent être obturés à leurs extrémités.

Il en résulte un refroidissement contrôlé de tous les cylindres, particulièrement des cylindres 171, 181 et 191 dont les trois faces externes pivotent autour des axes verticaux 187 et 197 et telles que représentées , selon l'axe 177 (Figure 12).

Les cylindres peuvent être de toutes longueurs.

Sur un châssis coulissant et enfichable côniquement à l'intérieur du cylindre 161, composé de toute forme de plan, on monte les organes centraux de calcul.

Des processeurs spécialisés, sur des cartes enfichables, sont fixés sur les plans internes des cylindres selon les dispositions représentées sur la Figure 12, à l'intérieur de l'armoire ouverte 171 dans sa partie fixe et dans sa porte. Les connexions se font en position fermée le long d'une ligne de connecteurs 198, 199.

Les cartes peuvent elles-mêmes être en substratum poreux ou étanche et comporter des fenêtres à porosité déterminée.

On a ainsi raccourci au maximum, les liaisons des processeurs centraux avec les processeurs périphériques, en réduisant de façon appréciable les durées de transmission dans un ensemble thermostaté par un flux dirigé de telle sorte qu'il module le refroidissement de telle zone ou même d'un processeur en particulier.

On peut utiliser le même principe pour emmagasiner ou traiter des données sur tous les supports.

L'organe de lecture/enregistrement peut être rotatif dans le cylindre central ou bien extérieur à celui-ci, les supports de données se présentant devant lui par la rotation de l'ensemble autour de l'axe de symétrie du cylindre 161.

**Revendications**

1. Structure alvéolaire formée par la répétition tridimensionnelle d'un même motif constitué par une cellule polyédrique cloisonnée (40) dont les faces et les cloisons sont matérialisées par des parois pleines,
caractérisée par le fait que cette cellule cloisonnée est composée de quatre pentaèdres (31, 32, 33, 34) à six sommets et neuf arêtes possédant une base rectangulaire (140, 139, 141, 138), une arête principale (AB) qui est parallèle à une paire de côtés opposés de la base et dont la longueur, identique pour les quatre pentaèdres, est supérieure à celle de ces côtés, et quatre arêtes (BC) d'égale longueur joignant les extrémités de l'arête principale et les sommets de la base, l'angle du dièdre formé par les deux faces limitées par l'arête principale (AB) des pentaèdres d'une première paire (32, 34) étant supplémentaire de celui du dièdre homologue des deux autres pentaèdres formant une deuxième paire (31, 33), les quatre pentaèdres composant la cellule (40) étant juxtaposés avec coïncidence de leurs arêtes principales (AB), les pentaèdres de la première paire (32, 34) étant disposés en opposition mutuelle de part et d'autre de ces arêtes confondues (AB) en une arête commune, de même que ceux de la deuxième paire (31, 33), les pentaèdres se succédant autour de cette arête commune accolés par des faces appartenant aux dièdres précités,
que la cellule cloisonnée (40) se répète suivant la direction (I) perpendiculaire aux plans des bases (139, 138) de la première paire de pentaèdres (32, 34) opposés dans la cellule, pour former un barreau (41) de cellules (40) dans lequel celles-ci sont accolées par les faces formées par lesdites bases, disposées en coïncidence,
que le barreau de cellules (41)) se répète suivant la direction (II) perpendiculaire aux plans des bases (140, 141) de la deuxième paire de pentaèdres (31,33) des cellules (40) du barreau, pour former une nappe (42) de barreaux (41) dans laquelle les cellules des barreaux contigus sont accolées par les faces formées par lesdites bases, disposées en coïncidence,
et que la nappe de barreaux (42) se répète, dans la direction (III) perpendiculaire aux deux directions précédentes, avec un certain décalage transversal entre deux nappes contiguës, une nappe se déduisant d'une nappe contiguë par une double translation définie par la somme d'un premier vecteur coïncidant avec l'arête principale (AB) commune des quatre pentaèdres d'une cellule (40) et d'un deuxième vecteur coïncidant avec l'une des quatre arêtes (BC) de ceux-ci qui partent de l'extrémité du premier vecteur.

2. Structure selon la revendication 1, caracterérisée par le fait qu'elle se limite à un barreau de cellules central (161) entouré coaxialement d'une ou de plusieurs couronnes de barreaux (170, 171, 180, 181, 190, 191).

3. Structure selon la revendication 2, caractérisée en ce que le cylindre central (161) est, évidé de tous éléments internes de parois de cellules.

4. Structure selon l'une quelconque des revendications précédentes,
caractérisée en ce que les cellules sont isolées, séparément ou par groupes.

5. Structure selon l'une quelconque des revendications précédentes,
caractérisée en ce que les cellules sont communicantes, totalement ou par groupes.

6. Structure selon la revendication 5, caractérisée en ce que les cellules communiquent totalement ou par groupes au travers de clapets directionnels (220).

7. Structure selon la revendication 5, caractérisé en ce que des cellules communiquent grâce à l'un au moins des moyens suivants : fusibles (267, 268), zones de rupture, action de la chaleur, de la pression ou d'un agent chimique.

8. Structure selon l'une quelconque des revendications précédentes,
caractérisée en ce qu'elle est limitée par une enveloppe (20, 21) comportant au moins une ouverture sur l'extérieur, laquelle est libre ou équipée d'un fusible et peut être raccordée à un dispositif de signalisation tel qu'une alarme (270, 271, 272).

9. Structure selon l'une quelconque des revendications précédentes,
caractérisée en ce que des fluides, statiques ou en mouvement, remplissent au moins certaines cellules (40).

**10.** Structure selon l'une quelconque des revendications précédentes,
caractérisée en ce que les fluides de remplissage sont différents, portés à différentes température, ou à différentes pressions, ou susceptibles de changer de caractéristiques sous des contraintes.

**11.** Structure selon l'une quelconque des revendications précédentes,
caractérisée en ce que tout ou partie des cellules contiennent un gaz ou une matière compressible jouant le rôle d'un amortisseur.

**12.** Structure selon l'une quelconque des revendications 9 à 11,
caractérisée en ce que les cellules contenant des fluides sont une vidangeables partiellement ou totalement de façon à provoquer une variation de l'inertie.

**13.** Structure selon l'une quelconque des revendications 9 à 12,
caractérisée en ce qu'elle est reliée à un dispositif (13) de déballastage par gravité ou sous pression.

**14.** Structure selon l'une quelconque des revendications précédentes,
caractérisée en ce que ses plans constitutifs sont des parois souples.

**15.** Structure selon la revendication 14,
caractérisée en ce que ses plans constitutifs se rigidifient par durcissement après que la structure a pris sa forme définitive.

**16.** Structure selon les revendications de 1 à 13,
caractérisée en ce que tous ses plans constitutifs sont des parois rigides.

**17.** Structure selon l'une quelconque des revendications précédentes,
caractérisée en ce que certains au moins des plans de cellules sont totalement ou partiellement poreux.

**18.** Structure selon les revendications 1 à 13, 16 et 17,
caractérisée en ce que les plans de cellules insérés à l'intérieur d'un même barreau (41) sont organisés de sorte qu'ils sont autobloquants.

**19.** Structure selon l'une quelconque des revendications précédentes,

caractérisée en ce que les plans le constituant sont construits ou recouverts de tous matériaux de synthèse.

**20.** Structure selon la revendication 16,
caractérisée en ce que ses plans constitutifs sont composés, totalement ou partiellement, de métaux ou alliages.

**21.** Structure selon la revendications 16,
caractérisée en ce que les plans le constituant sont composés ou recouverts de céramiques, armées ou non.

**22.** Structure selon l'une quelconque des revendications précédentes,
caractérisée en ce que des plans ou parties de plans le constituant sont composés de corps poreux ou servant de substratum à tout revêtement.

**23.** Structure selon l'une quelconque des revendications précédentes,
caractérisée en ce que ses plans constitutifs sont de plusieurs compositions différentes.

**24.** Structure selon l'une quelconque des revendications précédentes,
caractérisée en ce que certains de ses plans constitutifs sont plus épais que d'autres.

**25.** Procédé de réalisation d'un élément de structure selon l'une quelconque des revendications précédentes,
caractérisé en ce que les pièces constitutives de l'élément de structure sont assemblées et fixées entre elles sous forme de pièces planes, puis que l'ensemble est expansé.

**26.** Procédé selon la revendication 25,
caractérisé en ce que l'expansion est réalisée par l'introduction d'un fluide à l'intérieur de l'élément de structure

**27.** Procédé selon la revendication 26,
caractérisé en ce qu'un agent gonflant est introduit dans chaque cellule pendant l'assemblage des pièces planes, puisque le gonflement de l'agent est déclenché.

**28.** Procédé selon l'une quelconque des revendications 25 à 27,
caractérisé en ce que l'élément de structure est rigidifié après qu'il ait pris sa forme définitive avec ou sans moule extérieur.

**29.** Procédé selon l'une quelconque des revendications 25 à 28,

caractérisé en ce que les cellules sont remplies d'un substratum, puis l'élément est éliminé, puis on moule un nouve élément, avec ou sans renfort de matières à fibres aléatoires ou orientées dans les vides laissés par le substratum, puis le substratum est éliminé ou conservé.

30. Procédé selon l'une quelconque des revendications 25 à 29,
caractérisé en ce que des éléments plans ou préformés sont assemblés par tous moyens tels que collage, échauffement, vibration, pression, choc, rayonnement, etc..., ou par soudage sous toutes ses formes telles que laser, projection de faisceaux d'électrons, etc...

31. Procédé selon l'une quelconque des revendications 25 à 30,
caractérisé en ce que les accostages ou les jonctions de pièces se font par encastrement avec ou sans joint et peuvent comporter des tiges de solidarisation.

32. Procédé selon l'une quelconque des revendications précédentes, 25 à 31,
caractérisé en ce que des pièces formant cellules sont insérées à l'intérieur d'une rangée de cylindres et sont jointes à ces cylindres pour ne former qu'un ensemble monolithique.

33. Application d'un élément de structure selon l'une quelconque des revendications 1 à 24 à la réalisation de constructions industrielles, stratégiques, agricoles, individuelles ou collectives, fixes ou mobiles.

34. Application d'un élément de structure selon l'une quelconque des revendications 1 à 24 à la réalisation de constructions anti-sismiques.

35. Application d'un élément de structure selon l'une quelconque des revendications 1 à 24 à la réalisation de structures gonflables.

36. Application d'un élément de structure selon l'une quelconque des revendications 1 à 24, à la réalisation de structures et panneaux d'isolation thermique et de cloisons anti-feu.

37. Application d'un élément de structure selon l'une quelconque des revendications 1 à 24 à la réalisation de panneaux de stockage et d'échange d'énergie.

38. Application d'un élément de structure selon l'une quelconque des revendications 1 à 24 à la réalisation de structures et panneaux d'isolation phonique décomposant et réverbérant les ondes soniques.

39. Application d'un élément de structure selon l'une quelconque des revendications 1 à 24 à la réalisation de structures et panneaux anti-radiations.

40. Application d'un élément de structure selon l'une quelconque des revendications 1 à 13 et 15 à 24 à la réalisation de structures et panneaux de supports de précision ou de guidage.

41. Application d'un élément de structure selon l'une quelconque des revendications 1 à 24 à la réalisation de structures et panneaux de soutènement, de fixation ou d'ancrage.

42. Application d'un élément de structure selon l'une quelconque des revendications 1 à 13 et 15 à 24 à la réalisation de fermetures de sécurité telles que des portes de hangars blindés, de silos, etc...

43. Application d'un élément de structure selon l'une quelconque des revendications 1 à 13 et 15 à 24 à la réalisation d'éléments de filtration.

44. Application d'un élément de structure selon l'une quelconque des revendications 1 à 13 et 15 à 24 à la réalisation d'éléments de pervaporation.

45. Application d'un élément de structure selon l'une quelconque des revendications 1 à 24 à la construction d'enceintes de confinement de tous corps ou matières dangereux ou stratégiques, mobiles ou fixes telles que des containers, des réservoirs, des abris N.B.C, etc...

46. Application d'un élément de structure selon l'une quelconque des revendications 1 à 24 à la construction d'abris mobiles automoteurs ou montables sur des véhicules.

47. Application d'un élément de structure selon l'une quelconque des revendications 1 à 24 à la construction aéronautique et spatiale en éléments tels que cellules, ailes, cloisons, planchers, gouvernes, etc...

48. Application d'un élément de structure selon l'une quelconque des revendications 1 à 13 et 15 à 24, à la construction de bâtis de machines, de moteurs, de turbines à gaz, etc...

49. Application d'un élément de structure selon l'une quelconque des revendications 1 à 13 et 15 à 24, à la construction de pièces allongées telles que poteaux, poutres, mâts, arbres de transmission, etc...

**50.** Application d'un élément de structure selon l'une quelconque des revendications 1 à 13 et 15 à 24, à la construction d'armoires pour une utilisation électronique.

**51.** Application d'un élément de structure selon l'une quelconque des revendications 1 à 24, à la construction de tout ouvrage de marine tel que coque de navire, engins de plongée, mâts, portes d'écluses, structures offshore, etc...

**Claims**

**1.** Alveolar structure constructed by the three-dimensional repetitive juxtaposition of one same pattern consisting of a polyhedral shell-like element, the faces of which being materialized by solid walls,

characterized by the fact that this shell-like element is composed of four petahedrons (31,32,33,34) with six vertices and nine edges having a rectangular base (140, 139, 141, 138), one principal edge (AB) which is parallel to one pair of opposed sides of the base and which length, identical for the four pentahedrons, is superior to the length of these sides, and four edges (BC) of equal length joining the extremities of the principal edge and the vertices of the base, the angle of the dihedron formed by the two faces limited by the principal edge (AB) of the pentahedrons of a first pair (32, 34) being supplementary to the angle of the homologous dihedron of the two other pentahedrons forming a second pair (31, 33), the four pentahedrons composing the cell (40) being juxtaposed, their principal edges (AB) being coincident, the pentahedrons of the first pair (32, 34) being disposed in mutual opposition on both sides of these coincident edges (AB) making one common edge, as well as those of the second pair (31, 33), the pentahedrons following themselves around this common edge being joined by faces related to the previously mentioned dihedrons,

that the shell-like element (40) is recurring along direction (I) perpendicular to the planes of the bases (139, 138) of the first pair of the pentahedrons (32, 34) opposed in the cell, in order to form a bar (41) where the cells (40) are joined by the faces formed with the aforesaid bases, disposed in coincidence,

that the bar made of these cells (41) is recurring along direction (II) perpendicular to the planes of the bases (140, 141) of the second pair of pentahedrons (31, 33) of the cells of the bar, in order to form a sheet (42) of bars (41) where the cells of the adjacent are joined by the faces formed by the planes of the aforesaid bases, disposed in coincidence,

and that the sheet of bars (42) is recurring along direction (III) perpendicular to the two previous directions, with a certain transverse shift between two adjacent sheets, one sheet being deducted from an adjacent sheet through a double translation determined by the addition of a first vector coincident with the principal edge (AB) being common to the four pentahedrons of a cell (40), to a second vector coincident with one of their four edges (BC) starting from the extremity of the first vector.

**2.** Structure designed according to claim 1, characterized by the fact that it is limited to one central bar of cells (161), coaxially surrounded by one or several concentric layers of bars (170, 171, 180, 181, 190, 191).

**3.** Structure designed according to claim 2, characterized by the fact that the central cylinder (161) is hollowed out from all internal elements of cell walls.

**4.** Structure designed according to anyone of the previous claims, characterized by the fact that the cells are independent, separately or in groups.

**5.** Structure designed according to anyone of the previous claims, characterized by the fact that the cells are intercommunicating, totally or in groups.

**6.** Structure designed according to claim 5, characterized by the fact that the cells are intercommunicating, totally or in groups, via directional valves (220).

**7.** Structure designed according to claim 5, characterized by the fact that the cells are communicating via at least one of the following means : fuses (267, 268), breaking zones, action of heat, of pressure or of a chemical agent.

**8.** Structure designed according to anyone of the previous claims, characterized by the fact that it is limited by an envelope (20, 21) including at least one opening to the outside, which is free or equipped with a signalling device such as an alarm (270, 271, 272).

**9.** Structure designed according to anyone of the previous claims, characterized by the fact that fluids, static or moving, are filling up at least some of the cells (40).

10. Structure designed according to anyone of the previous claims, characterized by the fact that the filling-up fluids are different, have different temperatures, or different pressures, or are capable of changing properties under stresses.

11. Structure designed according to anyone of the previous claims, characterized by the fact that all or some of the cells contain a gas or a compressible matter acting as a damping device.

12. Structure designed according to anyone of claims 9 to 11, characterized by the fact that the cells containing fluids can be totally or partially drained, in order to induce a variation of inertia.

13. Structure designed according to anyone of claims 9 to 12, characterized by the fact that it is connected to an unballasting device, by gravity or under pressure.

14. Structure designed according to anyone of the previous claims, characterized by the fact that its consecutive planes are flexible walls.

15. Structure designed according to claim 14, characterized by the fact that its constitutive planes are rigidifying by hardening after that the structure has taken its final shape.

16. Structure designed according to claims from 1 to 13, characterized by the fact that all its constitutive planes are rigid.

17. Structure designed according to anyone of the previous claims, characterized by the fact that at least some of the planes of the cells are totally or partially porous.

18. Structure designed according to claims 1 to 13, characterized by the fact that the planes of the cells inserted inside one same bar (41) are organized in order to be self-locking.

19. Structure designed according to anyone of the previous claims, characterized by the fact that its constitutive planes are made of or lined with synthetic materials.

20. Structure designed according to claim 16, characterized by the fact that its constitutive planes are totally or partially made of metals or alloys.

21. Structure designed according to claim 16, characterized by the fact that its constitutive planes are made of or lined with ceramics, reinforced or not.

22. Structure designed according to anyone of the previous claims, characterized by the fact that its constitutive planes, or part of these planes, are made of porous materials or used as a substrate for any kind of lining.

23. Structure designed according to anyone of the previous claims, characterized by the fact that its constitutive planes are made of several different components.

24. Structure designed according to anyone of the previous claims, characterized by the fact that some of its constitutive planes are thicker than others.

25. Construction process of a structure designed according to anyone of the previous claims, characterized by the fact that the constitutive parts of the structure element are assembled and joined together as plane sheets, and the whole system is expanded.

26. Construction process according to claim 25, characterized by the fact that the expansion is carried out by means of the introduction of a fluid into the structure element.

27. Construction process according to claim 26, characterized by the fact that an expanding agent is introduced into each cell during the assembly of the plane elements, and the expansion of the agent is started afterwards.

28. Construction process according to anyone of claims 25 to 27, characterized by the fact that the structure element is rigidified after it has taken its final form, with or without external mould.

29. Construction process according to anyone of claims 25 to 28, characterized by the fact that the cells are filled with a substrate, and the element is eliminated, then another element is moulded, with or without reinforcement with fibrous materials, which fibres can be random disposed or oriented, in the empty spaces left by the substrate, and then the substrate is eliminated or kept.

30. Construction process according to anyone of claims 25 to 29, characterized by the fact that plane or pre-shaped elements are assembled by any means, such as bonding, heating, vibration, pressure, shock, radiation, and the like, or through welding of any kind, such as laser welding, electron beam welding, and the like.

31. Construction process according to anyone of claims 25 to 30, characterized by the fact that the matchings or the junctions of elements are made through fixing, with or without joint, and which can feature interlocking rods.

32. Construction process according to anyone of the previous claims, 25 to 31, characterized by the fact that elements forming cells are inserted inside a row of cylinders and are joined to these cylinders, in order to form a monolithic unit.

33. Application of an element of structure designed according to anyone of claims 1 to 24, to the construction of industrial, strategic, agricultural buildings, individual or collective, fixed or mobile.

34. Application of an element of structure designed according to anyone of claims 1 to 24, to the construction of para-seismic buildings.

35. Application of an element of structure designed according to anyone of claims 1 to 24, to the construction of inflatable structures.

36. Application of an element of structure designed according to anyone of claims 1 to 24, to the construction of heat insulating and fire-proof structures and panels.

37. Application of an element of structure designed according to anyone of claims 1 to 24, to the construction of panels for energy storage and exchange.

38. Application of an element of structure designed according to anyone of claims 1 to 24, to the construction of sound insulating structures and panels, resolving and reverberating the acoustic waves.

39. Application of an element of structure designed according to anyone of claims 1 to 24, to the construction of anti-radiation structures and panels.

40. Application of an element of structure designed according to anyone of claims 1 to 13 and 15 to 24, to the construction of structures and panels for precision or guidance benches.

41. Application of an element of structure designed according to anyone of claims 1 to 24, to the construction of structures and panels for supporting, fastening or anchoring.

42. Application of an element of structure designed according to anyone of claims 1 to 13 and 15 to 24, to the construction of security locking devices, such as doors for bomb-proof shelters, silos, and the like.

43. Application of an element of structure designed according to anyone of claims 1 to 13 and 15 to 24, to the construction of filtration elements.

44. Application of an element of structure designed according to anyone of claims 1 to 13 and 15 to 24, to the construction of pervaporation elements.

45. Application of an element of structure designed according to anyone of claims 1 to 24, to the construction of casings for confinement of any dangerous or strategic substance or material, mobile or fixed, such as containers, tanks, N.B.C. shelters, and the like.

46. Application of an element of structure designed according to anyone of claims 1 to 24, to the construction of mobile shelters, self-propelled or vehicle-mounted.

47. Application of an element of structure designed according to anyone of claims 1 to 24, to the aeronautical and space construction of elements such as airframes, wings, walls, floors, control surfaces, and the like.

48. Application of an element of structure designed according to anyone of claims 1 to 13 and 15 to 24, to the construction of mounting frames for machines, engines, gas turbines, and the like.

49. Application of an element of structure designed according to anyone of claims 1 to 13 and 15 to 24, to the construction of long elements such as poles, girders, masts, driving shafts, and the like.

50. Application of an element of structure designed according to anyone of claims 1 to 13 and 15 to 24, to the construction of cabinets for electronic use.

51. Application of an element of structure designed according to anyone of claims 1 to 24, to the construction of any marine work such as hulls of vessels, diving machines, masts, sluice gates, offshore structures, and the like.

**Patentansprüche**

1. Zellenstruktur, gebildet aus der dreidimensionalen Wiederholung des gleichen Motivs, bestehend aus einer abgegrenzten vielflächigen Zelle (40), deren Flächen und Trennungen aus massiven Wänden bestehen, dadurch gekennzeichnet, daß diese abgetrennte Zelle aus vier Pentaedern (31, 32, 33, 34) besteht, mit sechs Spitzen und neun Kanten und einer rechteckigen Basis (140, 139, 141, 138), mit einer Hauptkante (AB), die parallel zu einem Paar der der Basis gegenüberliegender Seiten verläuft, und deren für die vier Pentaeder identische Länge größer als diejenige seiner Seiten beträgt, und vier Kanten (BC) gleicher Länge, die die Enden der Hauptkante und die Spitzen der Basis verbinden. Der Flächenwinkel, der von den beiden durch die Hauptkante (AB) der Pentaeder eines ersten Paares (32, 34) gebildet wird, das zusätzlich zu demjenigen des gleichen Flächenwinkels der beiden anderen Pentaeder ist, die ein zweites Paar bilden (31, 33), wobei die vier Pentaeder, die die Zelle (40) bilden, nebeneinander liegen mit Übereinstimmung ihrer Hauptkanten (AB), wobei die Pentaeder des ersten Paares (32, 34) zueinander entgegengesetzt beidseitig dieser Kanten (AB), in einer gemeinsamen Kante liegen, so daß diejenigen des zweiten Paares (31, 33), mit um diese gemeinsame Kante aufeinanderfolgenden Pentaedern, mit Flächen zusammenhängen, die zu den vorgenannten Flächenwinkeln gehören,

daß die abgegrenzte Zelle (40) sich in senkrechter Richtung (I) zu den Ebenen der in der Zelle entgegengesetzt liegenden Grundflächen (139, 138) des ersten Paares Pentaeder (32, 34) wiederholt, um einen Stab (41) Zellen (30) zu bilden, in dem diese durch die Flächen aneinanderhängen, die von den besagten Grundflächen gebildet werden, die übereinstimmend angeordnet sind, daß der Zellenstab (41) sich in senkrechter Richtung (II) zu den Ebenen der Grundflächen (140, 141) des zweiten Paares Pentaeder (31, 33) der Zellen (40) des Stabes wiederholt, um eine Decke (42) aus Stäben (41) zu bilden, in der die Zellen der aneinandergrenzenden Stäbe durch die von den besagten Ebenen gebildeten Flächen zusammenhängen und übereinstimmend angeordnet sind,

und daß die Decke aus Stäben (42) sich in senkrecht zu den beiden vorherigen verlaufender Richtung (III) wiederholt, mit einer gewissen Querverschiebung zwischen zwei aneinandergrenzenden Decken, wobei sich eine Decke von einer fortlaufenden Decke durch eine doppelte Verschiebung absetzt, die von der Summe eines der mit der Hauptkante (AB) übereinstimmend liegenden ersten Vektors definiert wird, und eines zweiten Vektors, der mit einer der vier Kanten (BC) derjenigen übereinstimmt, die vom Ende des ersten Vektors ausgehen.

2. Struktur nach Anspruch 1, dadurch gekennzeichnet, daß sie sich auf einen zentralen Stab Zellen (161) beschränkt und koaxial von einer oder mehreren Stabkronen (170, 171, 180, 181, 190, 191) umgeben ist.

3. Struktur nach Anspruch 2, dadurch gekennzeichnet, daß der zentrale Zylinder (161) von allen internen Teilen der Zellenwände geleert ist.

4. Struktur nach einem beliebigen der vorstehenden Ansprüche, dadurch gekennzeichnet, daß die Zellen getrennt oder gruppenweise isoliert sind.

5. Struktur nach einem beliebigen der vorstehenden Ansprüche, dadurch gekennzeichnet, daß die Zellen alle oder gruppenweise zusammenhängen.

6. Struktur nach Anspruch 5, dadurch gekennzeichnet, daß die Zellen alle oder gruppenweise durch Richtungsklappen (220) zusammenhängen.

7. Struktur nach Anspruch 5, dadurch gekennzeichnet, daß die Zellen durch mindestens einer der folgenden Mittel zusammenhängen: Schmelzsicherungen (267, 268), Bruchzonen, Wärme, Druck oder ein chemisches Mittel.

8. Struktur nach einem beliebigen der vorstehenden Ansprüche, dadurch gekennzeichnet, daß sie von einem Mantel (20, 21) mit mindestens einer Öffnung nach außen begrenzt wird, der frei ist oder mit einer Schmelzsicherung ausgerüstet ist, und an eine Meldevorrichtung, so eine Alarmanlage (270, 271, 272) angekabelt werden kann.

9. Struktur nach einem beliebigen der vorstehenden Ansprüche, dadurch gekennzeichnet, daß die statischen oder mobilen Fluide mindestens gewissen Zellen (40) füllen.

10. Struktur nach einem beliebigen der vorstehenden Ansprüche, dadurch gekennzeichnet, daß diese Füllfluide verschieden sind, wenn sie auf verschiedene Temperaturen oder Drücke gebracht werden, oder ihre Merkmale unter diesen Belastungen ändern können.

11. Struktur nach einem beliebigen der vorstehenden Ansprüche, dadurch gekennzeichnet, daß alle oder ein Teil der Zellen ein Gas oder einen verdichtbaren Stoff enthalten, der die Rolle eines Dämpfers spielt.

12. Struktur nach einem beliebigen der vorstehenden Ansprüche 9 bis 11, dadurch gekennzeichnet, daß die Zellen, die Fluide enthalten, teilweise oder vollkommen geleert werden können, damit eine veränderliche Trägheit erzielt werden kann.

13. Struktur nach einem beliebigen der vorstehenden Ansprüche 9 bis 12, dadurch gekennzeichnet, daß sie an eine Vorrichtung (13) für Entlastung durch Schwerkraft oder unter Druck angeschlossen ist.

14. Struktur nach einem beliebigen der vorstehenden Ansprüche, dadurch gekennzeichnet, daß ihre sie bildenden Ebenen elastische Wände sind.

15. Struktur nach Anspruch 14, dadurch gekennzeichnet, daß ihre sie bildenden Ebenen durch Härtung steif werden, wenn die Struktur ihre endgültige Form angenommen hat.

16. Struktur nach den Ansprüchen 1 bis 13, dadurch gekennzeichnet, daß alle ihre sie bildenden Ebenen starre Wände sind.

17. Struktur nach einem beliebigen der vorstehenden Ansprüche, dadurch gekennzeichnet, daß wenigstens gewisse Zellenebenen vollkommen oder teilweise porös sind.

18. Struktur nach den Ansprüchen 1 bis 13, 16 und 17, dadurch gekennzeichnet, daß die in einem und demselben Stab (41) vorhandenen Zellenebenen so angeordnet sind, daß sie selbstblockierend sind.

19. Struktur nach einem beliebigen der vorstehenden Ansprüche, dadurch gekennzeichnet, daß die sie bildenden Ebenen von jeglichem Synthesematerial gebildet oder überdeckt sind.

20. Struktur nach Anspruch 16, dadurch gekennzeichnet, daß die sie bildenden Ebenen vollkommen oder teilweise aus Metallen oder Legierungen bestehen.

21. Struktur nach Anspruch 16, dadurch gekennzeichnet, daß die sie bildenden Ebenen aus verstärker Keramik bestehen oder überdeckt sind.

22. Struktur nach einem beliebigen der vorstehenden Ansprüche, dadurch gekennzeichnet, daß die sie bildenden Ebenen oder Teile von Ebenen aus porösen Körpern bestehen oder als Substrat für jegliche andere Verkleidung dienen.

23. Struktur nach einem beliebigen der vorstehenden Ansprüche, dadurch gekennzeichnet, daß ihre sie bildenden Ebenen aus mehreren verschiedenen Zusammensetzungen bestehen.

24. Struktur nach einem beliebigen der vorstehenden Ansprüche, dadurch gekennzeichnet, daß gewisse ihrer sie bildenden Ebenen stärker als andere sind.

25. Ausführungsverfahren für ein Strukturelement nach einem beliebigen der vorstehenden Ansprüche, dadurch gekennzeichnet, daß die das Strukturelement bildenden Teile untereinander in Form von ebenen Teilen montiert und befestigt sind, und daß dann die Baugruppe aufgeschäumt ist.

26. Verfahren nach Anspruch 25, dadurch gekennzeichnet, daß das Aufschäumen durch Einführung eines Fluids in das Strukturelement bewerkstelligt wird.

27. Verfahren nach Anspruch 26, dadurch gekennzeichnet, daß während der Montage der ebenen Teile ein treibendes Mittel in jede Zelle eingeführt wird, und daß dann das Blähen des Mittels ausgelöst wird.

28. Struktur nach einem beliebigen der Ansprüche 25 bis 27, dadurch gekennzeichnet, daß das Strukturelement nach der Annahme seiner endgültigen Form mit oder ohne äußere Gußform versteift wird.

29. Verfahren nach einem beliebigen der Ansprüche 25 bis 28, dadurch gekennzeichnet, daß die Zellen mit einem Substrat gefüllt werden, dann wird das Element entfernt, und danach gießt man ein neues Element mit oder ohne Verstärkung mit Werkstoffen mit beliebigen oder in die Leerräume gerichteten Fasern ein, die vom Substrat hinterlassen werden. Anschließend wird das Substrat entfernt oder beibehalten.

30. Verfahren nach einem beliebigen der Ansprüche 25 bis 29, dadurch gekennzeichnet, daß die ebenen oder vorgeformten Elemente mit jeglichem Mittel montiert werden: Kleben, Erhitzung, Schwingung, Druck, Stoß, Bestrahlung, usw..., oder durch Schweißen jeglicher Form, wie Laser, Elektronenbündelprojektion, usw...

31. Verfahren nach einem beliebigen der Ansprüche 25 bis 30, dadurch gekennzeichnet, daß die Kopplungen oder die Fugen der Teile mit Einlassen mit oder ohne Naht erfolgen und Festigkeitsstangen enthalten können.

32. Verfahren nach einem beliebigen der Ansprüche 25 bis 31, dadurch gekennzeichnet, daß die zellenbildenden Teile in eine Reihe Zylinder eingeführt sind und an diese Zylinder angebunden werden, damit sie einen Block bilden.

33. Einsatz eines Strukturelements nach einem beliebigen der Ansprüche 1 bis 24 in der Ausführung von industriellen, strategischen, landwirtschaftlichen, einzelnen oder kollektiven, feststehenden oder mobilen Konstruktionen.

34. Einsatz eines Strukturelements nach einem beliebigen der Ansprüche 1 bis 24, in der Ausführung von erdbebenfesten Konstruktionen.

35. Einsatz eines Strukturelements nach einem beliebigen der Ansprüche 1 bis 24 in der Ausführung von aufblasbaren Strukturen.

36. Einsatz eines Strukturelements nach einem beliebigen der Ansprüche 1 bis 24 in der Ausführung von Strukturen und Wänden für die Wärmedämmung und Brandmauern.

37. Einsatz eines Strukturelements nach einem beliebigen der Ansprüche 1 bis 24 in der Ausführung von Platten für Energiespeicherung und -austausch.

38. Einsatz eines Strukturelements nach einem beliebigen der Ansprüche 1 bis 24 in der Ausführung von Strukturen und Platten für die Schalldämmung, die die Schallwellen trennen und rückstrahlen.

39. Einsatz eines Strukturelements nach einem beliebigen der Ansprüche 1 bis 24 in der Ausführung von strahlenfesten Strukturen und Platten.

40. Einsatz eines Strukturelements nach einem beliebigen der Ansprüche 1 bis 13 und 15 bis 24 in der Ausführung von Strukturen und Platten von Präzisions- oder Führungsträgern.

41. Einsatz eines Strukturelements nach einem beliebigen der Ansprüche 1 bis 24 in der Ausführung von Strukturen und Platten für die Stützung, Befestigung oder Verankerung.

42. Einsatz eines Strukturelements nach einem beliebigen der Ansprüche 1 bis 13 und 15 bis 24 in der Ausführung von Sicherheitsabschlüssen, wie die Türen von gepanzerten Schuppen, Silos, usw...

43. Einsatz eines Strukturelements nach einem beliebigen der Ansprüche 1 bis 13 und 15 bis 24 in der Ausführung von Filterelementen.

44. Einsatz eines Strukturelements nach einem beliebigen der Ansprüche 1 bis 13 und 15 bis 24 in der Ausführung von Durchzerstäubung.

45. Einsatz eines Strukturelements nach einem beliebigen der Ansprüche 1 bis 24 in der Konstruktion von Verschlußbereichen für alle gefährlichen oder strategischen Körper oder Stoffe, mobil oder feststehend, wie Container, Behälter, Strahlenschutzräume (N.B.C.) usw...

46. Einsatz eines Strukturelements nach einem beliebigen der Ansprüche 1 bis 24 in der Konstruktion von mobilen Schutzräumen mit Eigenantrieb oder die auf Fahrzeugen montiert werden können.

47. Einsatz eines Strukturelements nach einem beliebigen der Ansprüche 1 bis 24 in der Luft- und Raumfahrtkonstruktion in Elementen, wie Zellen, Flügel, Trennwände, Böden, Steuer, usw...

48. Einsatz eines Strukturelements nach einem beliebigen der Ansprüche 1 bis 13 und 15 bis 24 in der Konstruktion von Maschinenständern, Motoren, Gasturbinen, usw...

49. Einsatz eines Strukturelements nach einem beliebigen der Ansprüche 1 bis 13 und 15 bis 24 in der Konstruktion von Langteilen, wie Pfeiler, Balken, Masten, Getriebewellen, usw...

50. Einsatz eines Strukturelements nach einem beliebigen der Ansprüche 1 bis 13 und 15 bis 24 in der Konstruktion von Schaltschränken für den Elektronikeinsatz.

**51.** Einsatz eines Strukturelements nach einem beliebigen der Ansprüche 1 bis 24 in der Konstruktion im Marinebereich, wie Schiffskörper, Tauchgeräte, Masten, Schleusentüren, Offshore-Anlagen, usw...

FIG.1

FIG.2

FIG.4

FIG.3

# FIG.5

# FIG.6

FIG. 8

122

146

FIG. 7

FIG.9

# FIG.10

# FIG.11

FIG.12

FIG.13

240

240A

EP 0 283 469 B1

FIG.14

240

240A

241

FIG.15

251

240

241

242

240A

243

244

243

FIG.16

243A

FIG.17

FIG.18

EP 0 283 469 B1

245

240

247

248

250

246

249

FIG.19

FIG.20

FIG.21

FIG.22

FIG.23

EP 0 283 469 B1

FIG.24

266　262　263　264

267

268

FIG.25

256

265

268

267

270　271　272

FIG.26

262

263

266

265

264

FIG.27